Europäisches Patentamt

(19) European Patent Office (11) Publication number: **0 191 822**

Office européen des brevets **B1**

(12) **EUROPEAN PATENT SPECIFICATION**

(45) Date of publication of patent specification: **31.10.90** (51) Int. Cl.⁵: **H 04 N 9/79**

(21) Application number: **85904173.3**

(22) Date of filing: **31.07.85**

(86) International application number:
**PCT/US85/01467**

(87) International publication number:
**WO 86/01063 13.02.86 Gazette 86/04**

(54) **INTERACTIVE VIDEO AND AUDIO CONTROLLER.**

(30) Priority: **01.08.84 US 636683**

(43) Date of publication of application:
**27.08.86 Bulletin 86/35**

(45) Publication of the grant of the patent:
**31.10.90 Bulletin 90/44**

(84) Designated Contracting States:
**AT BE CH DE FR GB IT LI LU NL SE**

(56) References cited:
FR-A-2 428 881    US-A-4 306 232
US-A-3 255 303    US-A-4 346 407
US-A-4 195 317    US-A-4 359 223
US-A-4 259 668    US-A-4 390 901
US-A-4 305 131    US-A-4 442 461

IEEE GLOBAL TELECOMMUNICATIONS
CONFERENCE, 29th November - 2nd December
1982, Miami, vol. 3, pages 1365-1369, IEEE, New
York, US; R.D. GORDON: "An intelligent
electronic book system and publishing facility"
Journal of the SMPTE, "Interactive Videodisc
Systems for Education"

(73) Proprietor: **WOW INTERNATIONAL LIMITED**
**1207 Peninsula Centre 67 Mody Road**
**Kowloon (HK)**

(72) Inventor: **BEST, Robert, J.**
**3507 Woodford Drive**
**San Jose, CA 95124 (US)**
Inventor: **CLAYBAUGH, David, H.**
**1558 Larkin Avenue**
**San Jose, CA 95129 (US)**

(74) Representative: **Wombwell, Francis et al**
**Potts, Kerr & Co. 15, Hamilton Square**
**Birkenhead Merseyside L41 6BR (GB)**

Courier Press, Leamington Spa, England.

## Description

Technical field

The present invention is related to interactive devices for allowing a user to selectively choose between serveral video and audio signals as can be supplied over the airways or telephone lines or through such devices as video tape recorders, video disc players and the like.

Background of the invention

With the revolution in data communication devices, additional attention is being focused on interactive communications in order to increase the efficiency of the data transfer process. This transfer process for interactive data communication can occur over airways, phone lines and the like and also from a resident data storage device. Interactive data communication is being successfully used of planned for such business enterprises as banking and catalog merchandising, for such entertainment enterprises as video games, and for educational purposes.

There are presently being introduced into various commercial locations, kiosks which are essentially used as merchandising tools that include a sales catalog recorded on laser disc. A customer can view the video images of the items in the catalog and then select and purchase items by interacting with the communication mechanism of the kiosk. The purchaser could selectively view the catalog by making selections from an index or menu provided on the video screen. Such interactive merchandising is also contemplated on a large scale over the commercial airways through the use of home television sets.

Besides video and computer games, and merchandising applications, interactive communication devices are used for educational purposes in that they are able, on a real time basis, to teach a subject and/or provide a number of questions and score the results of the answers. By scoring the results of the answers, the interactive device is able to formulate further textual or graphic materials and/or questions according to the level of accomplishment of the individual.

The present state of the art is such that improvements still need to be accomplished in these interactive communication devices to make these devices even more interactive. One such improvement includes eliminating all time when the video screen is blanked or displays an intermission image, also known as dead time, while a search or access function is carried out to provide a response appropriate for the user's input. An additional improvement includes providing a plurality of tracks, channels, data files, or individual information modules in a format which maximizes the amount of information stored and minimizes the access time. Further, to be most useful there improvements need to be accomplished on presently existing data storage and display devices such as, for example, video tape recorder, in order to take advantage of the large installed base of such devices.

Summary of the invention

The present invention is directed toward providing an efficient and real time controller for interactive audio and video communication from a source signal. The present invention provides for an interactive controller which is adapted for use with source signals generated by present technology which has a large installed user base, as for example video tape recorders, which makes the user unaware of any search time and which provide for an efficient format for storing multiple channels or tracks of data.

It is to be understood that the source signal may also be generated off the airways, and by magnetic media played through appropriate devices, or from optical laser disc media played by a laser disc device. In addition, other devices and processes for providing an appropriate source signal for the interactive controller may be used.

While the present embodiment hereof contemplates the use of an existing and unmodified video tape recorder and appropriate magnetic tape with appropriate video tracks provided thereon, other devices can be used to provide an appropriate signal. It is also to be understood that the interactive controller can be provided as an add-on unit to existing source signal producing devices such as, for example, existing video tape recorders, existing video disc players, existing video monitors and the like, or can be built into such devices.

The present invention as set forth in claim 1 solves the efficiency and real time problems inherent in the prior devices due to its unique signal formatting technique which allows for the interleaving of alternate video images. Essentially, an embodiment of the present invention provides for at least a first track video and a second video track and a device for selecting between the various tracks. The selected track is presented on a screen. Appropriate graphics and textual information, along with audio information is provided on the tracks, and the graphics and textual material is output along with the video image with the audio information output over appropriate audio devices.

In one aspect of the invention, an interactive controller is provided for selecting between two or more tracks of video data contained on a video medium responsive to a player input, and for displaying the selected video track. The controller comprises a device for reading a video signal which is comprised of a series of interactive video fields. For a video signal comprised of two tracks, each track can be comprised of, for example, first and second pluralities of alternating fields. For video signals comprised of N tracks, each track can be comprised of every Nth field in line of the signal.

The controller further includes a device responsive to the input of a player for selecting between the tracks provided on the source signal. The controller additionally includes a device for outputting the field related to the selected tract to a video screen and memory means for simultaneously storing the selected field. Further, a device is provided to output the stored field in substitution for the non-selected fields so that there is not interruption in this video presentation to the viewer. In addition this field store capability provides for the capability of freezing a selected field or picture on the video monitor.

It is to be understood that this present controller can be used with existing video tape recorders which play media organized as a series of frames, each frame including two fields and each field including $262\frac{1}{2}$ horizontal scan lines. In the prior art, it is understood that each picture is provided by the interlacing of the horizontal scan lines of the first and second field to provide a complete picture. With the present invention, each of successive fields are used for separate tracks which provides a separate and distinct picture with the memory device providing a copy of the selected field in substitution for the next successive non-selected field in line on the tape medium. For media which has more than two tracks the frame format would be inappropriate.

In another aspect of the invention, means are provided for efficiently separating the luminance and chrominance signals from the video signal and digitizing these signals so that they may be stored in a memory device. Additionally, means are provided for converting the luminance and chrominance signals to analog signals prior to their being presented to the video monitor.

Other advantages and aspects of the invention are detailed below.

Brief description of the figures

Fig. 1 is a block diagram of the interactive controller of an embodiment of the invention.

Fig. 2 is a schematic view of part of the digital timing circuitry of the embodiment of Fig. 1.

Fig. 3 is a schematic view of part of the digital video buffer, address registers, and related digital circuitry of the embodiment of Fig. 1.

Fig. 4 is a schematic view of the microprocessor unit of the digital circuitry of the embodiment of Fig. 1.

Fig. 5 is a block diagram of part of the analog video buffer and the analog to digital conversion circuitry of the embodiment of the invention of Fig. 1.

Fig. 6 is a block diagram of the digital to analog conversion circuitry of the embodiment of the invention of Fig. 1.

Fig. 7 is a waveform diagram for the embodiment of Fig. 1.

Fig. 8 is a waveform signal diagram for the input signal to the embodiment of Fig. 1.

Detailed description of the preferred embodiment

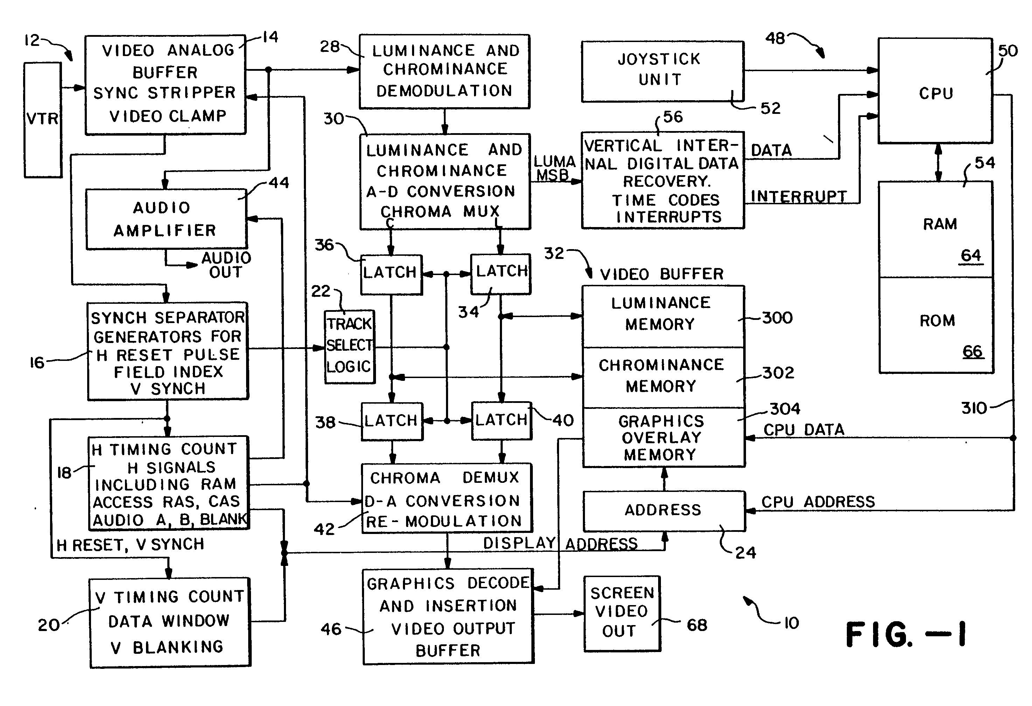

With reference to the figures, and in particular, Fig. 1, the interactive video and audio controller 10 of the invention is depicted. The controller 10 includes a synchronization unit 12 composed of blocks 14, 16, 18, 20 and 22, a video buffer unit 26 composed of blocks 28, 30, 32, 34, 36, 38, 40, 42, an audio output unit 44, a video output unit 46 and a microprocessor unit 48 comprised of blocks 50, 52, 54, 56. The interactive controller 10 can interactively process a video and/or audio signal stored on a medium such as, for example, video tape or a video disk or other magnetic or optical media, responsive to the input to the controller 10 provided by, for example, a transducer such as the joystick unit of Block 52.

It is to be understood that an appropriate signal transmitted such as a television signal can be used without the need for locally based media. It is further to be understood that the present preferred embodiment contemplates an add-on controller 10 to an existing video tape recorder, but that built-in controllers for video tape recorders and add-on and built-in controllers for other devices which produce the appropriate input signals are within the scope of this invention. Considering the present embodiment, the video and/or audio medium as used on a video tape recorder has provided thereon multiple tracks for storing multiple answers, or story lines, or educational, entertainment or business information and data. The selection between the choices provided on the video medium is made by microprocessor unit 48 either by input from the joystick unit 52 thereof or as a result of script instruction, such as, for example, a graphics request signal for requesting a graphics utility stored in microprocessor unit 48 provided on the media as will be explained below. The controller 10 accomplishes selection by storing and playing various portions of the information and data provided on the medium. The present embodiment can store video fields for playing out as required.

In a preferred embodiment, the information and data are stored on video tape as a series of fields. Using conventional television terminology, a single picture or frame is comprised of two fields which have $262\frac{1}{2}$ horizontal or scan field lines for a total single picture or single frame of 525 horizontal or scan field lines. A first field is scanned across a television screen and then a second field is interlacingly scanned across the screen to produce a single picture. In this embodiment, however, a first field comprises one answer or story line, and a second field comprises a second answer or story line. The selected answer or story line and thus the selected field is displayed on the screen 68 and simultaneously stored in the video buffer 32 and also subsequently output in place of the non-selected field which represents the other answer or story line so that there is no discontinuity in the output picture. As explained below, for a plurality of answers or story lines, a plurality of interleaved fields can be used. For example, a first field can have one story line, a second successive field which can have a second story line, a third successive field can have a third story, and a fourth successive field a fourth story. Accordingly, for a signal of four story lines the fifth field has data for the first story line. It is to be understood that interleaving can also be accomplished by single or multiple frames as well as field by field. Additionally, it is to be understood that the horizontal scan lines of each field can be interleaved.

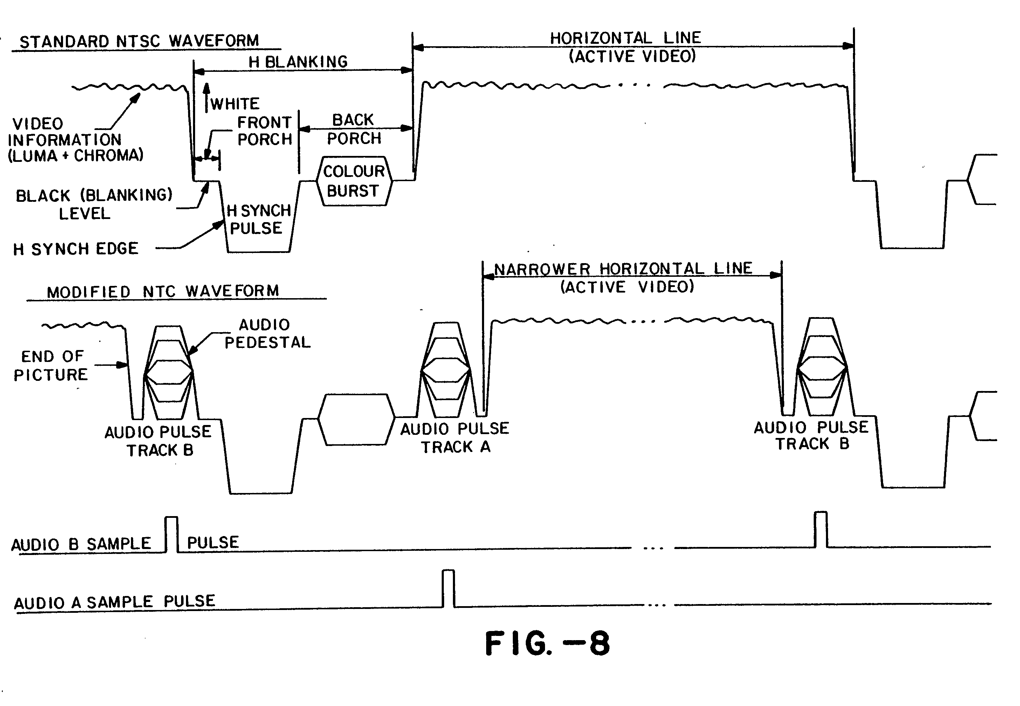

Figure 8 depicts a standard NTSC waveform and a modified waveform to be used with the controller 10 and which comprises part of the inventor. It is to be noted that the horizontal line where active video information is stored has been narrowed in favor of sound pulses for audio track A and audio track B. Additional audio tracks can also be added in a similar manner. It is to be further understood that the horizontal lines at the beginning of each frame which do not appear on the video screen can be used to store programming information and instructions such as graphics request signals, joystick test signals, change tract signals, and many more.

Synchronization unit

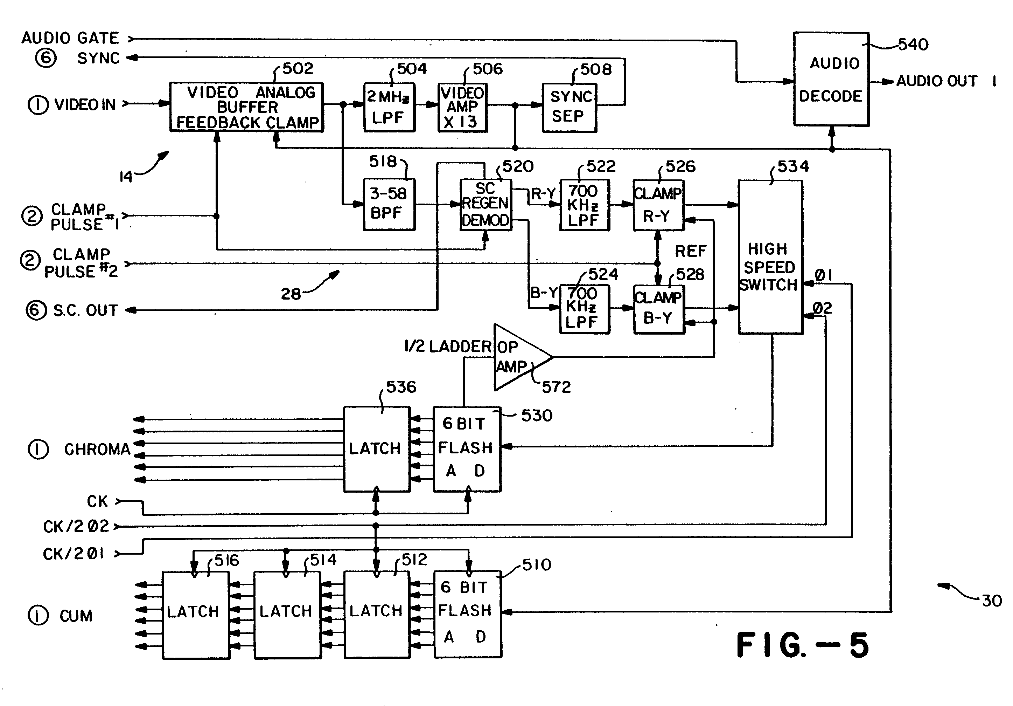

Referring to Fig. 1, block 14 of synchronization unit 12 includes a video analog buffer and feedback clamp 502 (Fig. 5) and a synchronization stripper 508 (Fig. 5). Block 14 takes the incoming video analog signals which have audio information multiplexed thereon, and passes these signals through amplifiers and filters to strip off the composite synchronization and to clamp the video levels to stabilize the black video level. Further details of these devices are provided below with a discussion of Fig. 5.

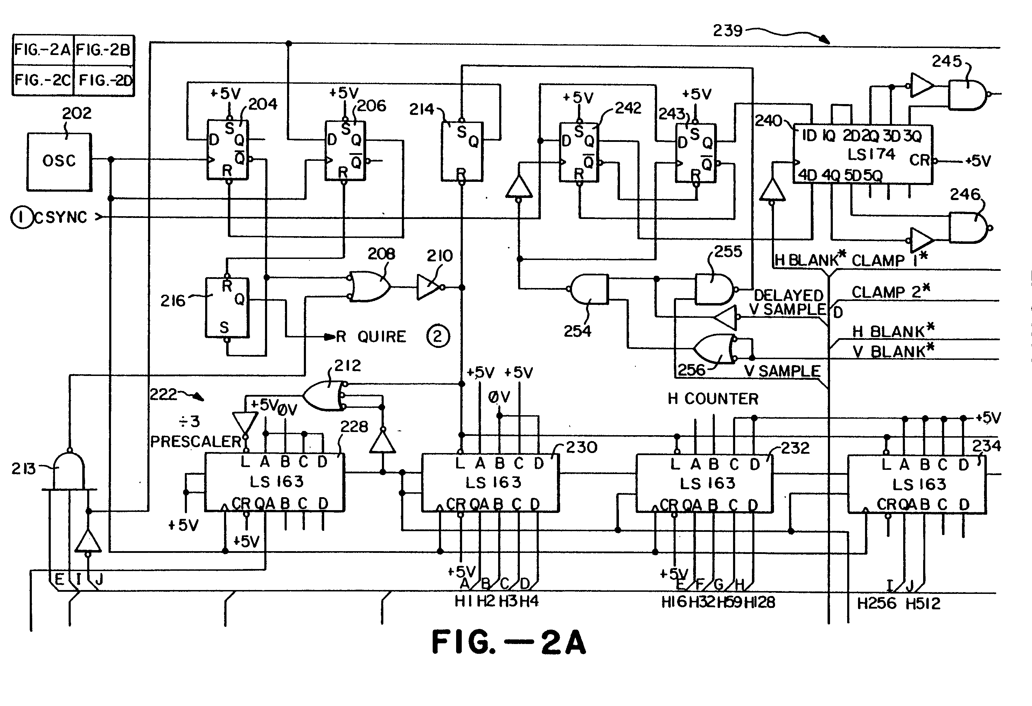

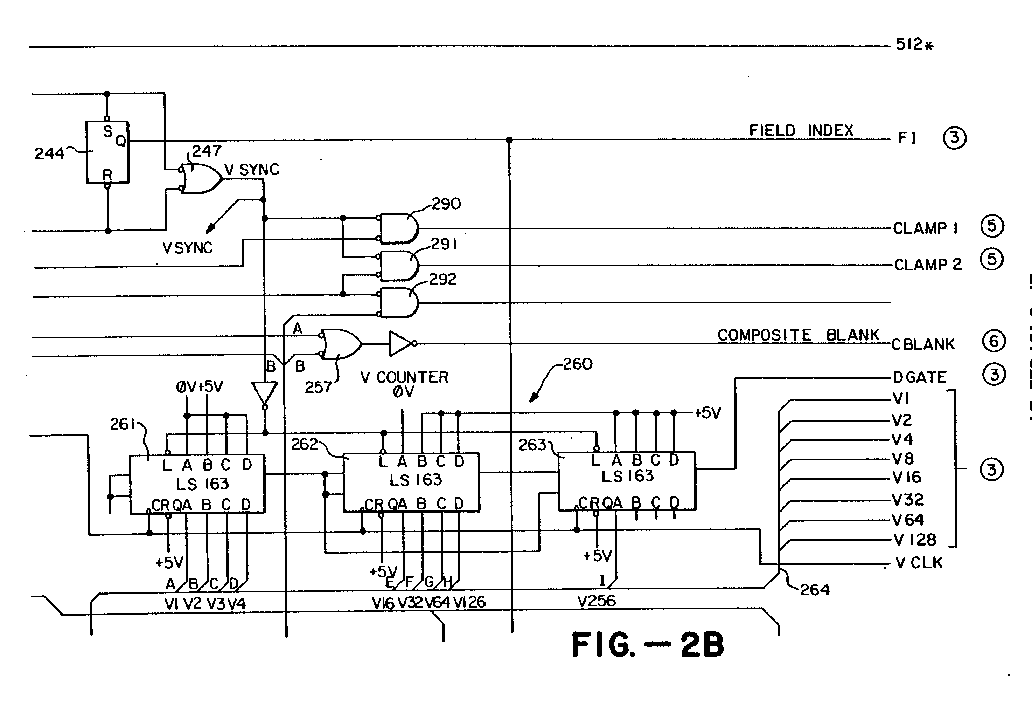

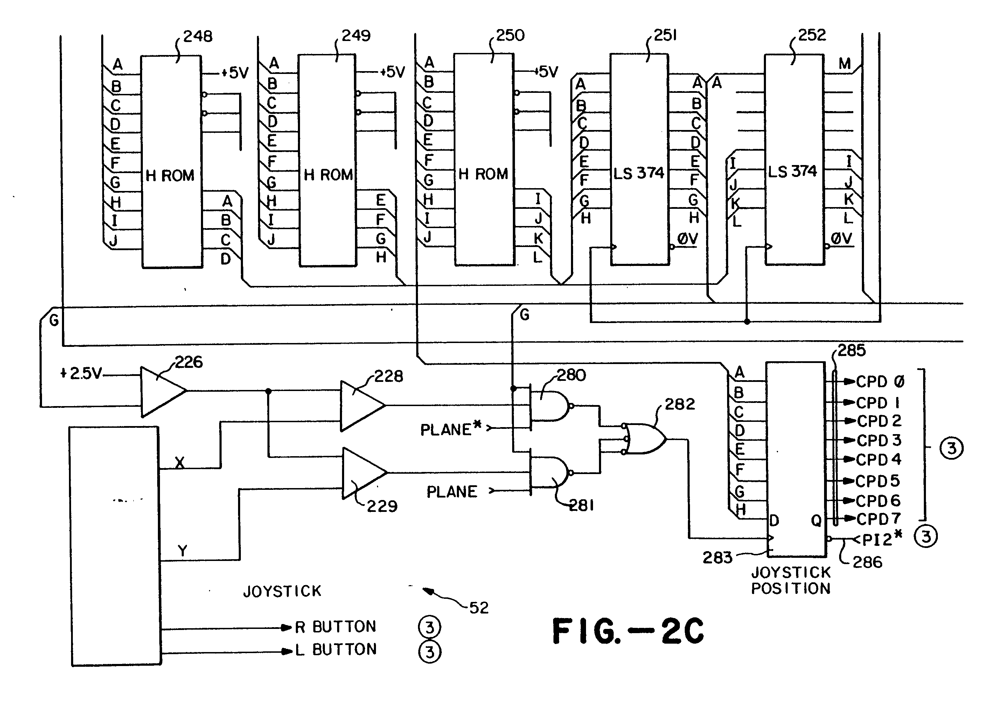

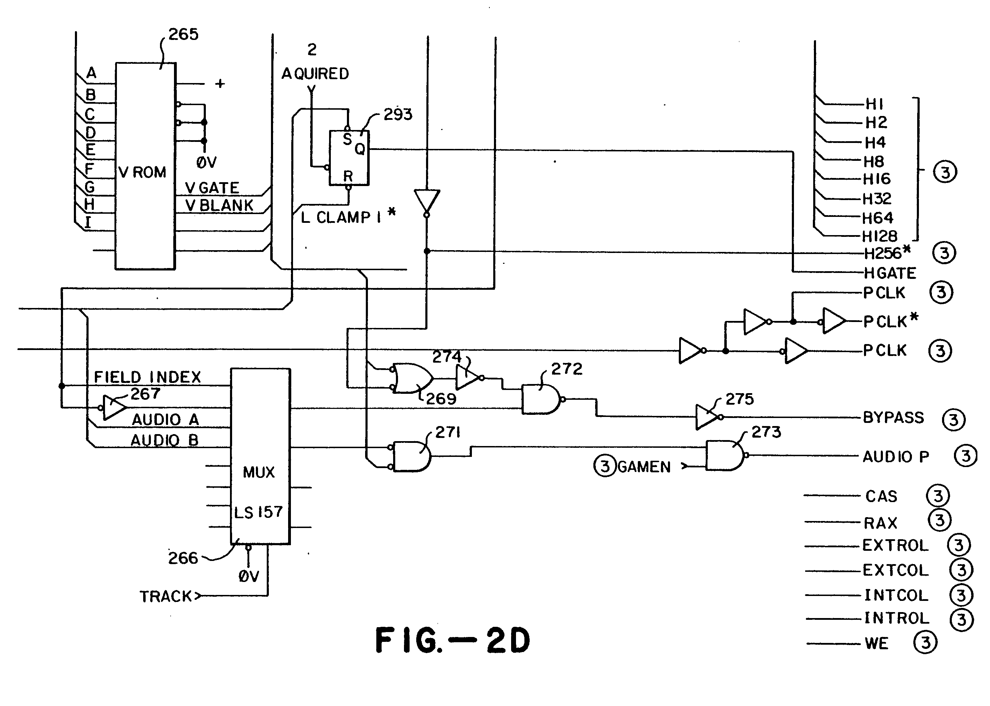

The output from block 14 is provided to blocks 16, 28, 44. Block 16 (Fig. 1) provides for a synchronization separation, for horizontal reset pulse generation, field index generation and vertical synchronization pulse generation (Fig. 2).

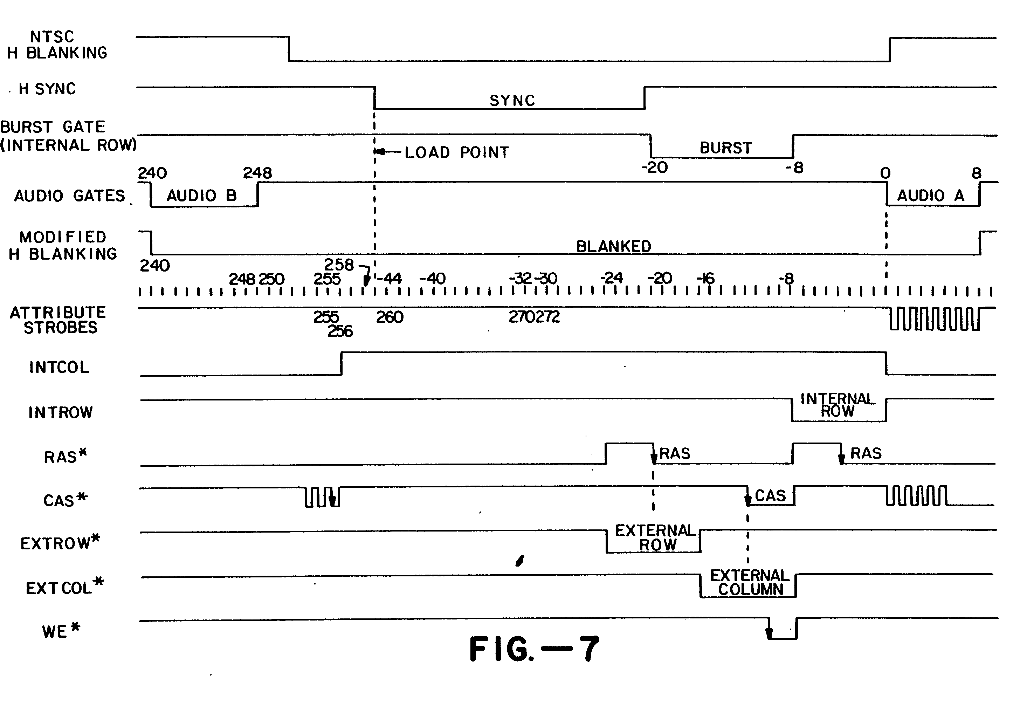

As can be seen in the upper left portion of Fig. 2, clocking is provided by a 14.318 MHz oscillator 202. This clocking is provided to Flip Flops 204, 206 which, in connection with Flip Flops 214, 216 and surrounding OR-gates 208, 212, NAND gate 213, and inverter 208, provides a reference pulse or reset pulse for the start of the horizontal video scan line. Synchronization is accomplished by the above circuit as follows. The starting condition is with the Q output equal to one (i.e. high) for FLIP FLOP 214. Accordingly, this input D of latch 204 is equal to one (i.e. high). The leading edge of HSYNCH (explained below) which is contained within CSYNCH (explained below) clocks FLIP FLOP 204 so that the output of FLIP FLOP 204 is zero. This signal passes through OR-gate 208 and inverter 210 and resets FLIP FLOP 214, thus setting this input to D of FLIP FLOP 204 equivalent to zero. This renders FLIP FLOP 204 unreceptive to further CSYNCH transitions. The same signal that resets FLIP FLOP 214 provides load signal to a horizontal counter chain 222 which is comprised, in a preferred embodiment, of synchronous four bit counter 228, 230, 232, 234. This signal causes a synchronous load of the binary value — 44 (see horizontal line position scale in Fig. 7) into counter 230, 232 and 234 and sets counter 228, through a divide-by-three prescriber to an initialized value. The H512 signal (signal J output of counter 234) goes high as a result and is inverted (and resdesigned 512*) and applied to the D input of FLIP FLOP 206 and resets FLIP FLOP 204. Thus the output of FLIP FLOP 204 ($\overline{Q}$) is a reset pulse of duration not less than one clock period even though CSYNC is asynchronous to the clock. FLIP FLOP 214 which stays reset until the latter part of the horizontal period, prevents the circuit from responding to the horizontal pulsers in the vertical interval. This function is augmented by the decoding circuit including NAND gate 213 which, if a valid HSYNC edge is not received when the horizontal counter chain 22 is at a nominal count of 258 (then being loaded with the count — 44 to give a nominal horizontal period of 258+44=302) clocks detects that the horizontal counter chain 222 has overrun to a count of 272 and automatically issues a $\overline{LOAD}$ pulse. This simulates a late HSYNC edge and causes the Horizontal counter chain 222 to go to the next HSYNC edge. NAND gate 255 (described below) provides this signal which sets FLIP FLOP 214, and hence FLIP FLOP 204 to look for the next HSYNC pulse.

The horizontal counter chain 222 which, among other things, provides addresses for addressing the video buffer 32 by line 253, as will be described below, also supplies horizontal counter pulses to memory chips or horizontal ROMs (HROM) 248, 249, 250. It is noted that the numbers provided in the left and right margins of the figures adjacent the signal lines throughout the figures adjacent signal lines identify the figures to which the signal on that particular line is provided. The output from HROMs 248, 249, 250 is provided to latches 251, 252. The latches 251, 252 serve to time synchronize the output of the HROMs as they are clocked by ripple carry output of counter 228.

In HROMs 248, 249, 250 (Block 18, Fig. 1) is stored a series of timing tracks related to the horizontal interval. The output of the HROMs 248, 249, 250 is provided through latches 251, 252 to the synchronization separating circuitry 239. These signals are used for the synchronization separation process. In Fig. 7 an idealized version of a horizontal interval blanking pulse is depicted along with a modified horizontal interval blanking pulse used in this embodiment. The signals from HROMs 248, 249, 250 include row access strobe (RAS), column access strobe (CAS), write enable (WE), internal column (INTCOL), internal row (INTROW), external column (EXTCOL) and external row (EXTROW), all of which provide access signals for video buffer 32. Also depicted are a color burst gating pulse and two audio gating pulses which are generated by the HROMs. The waveforms INTCOL, INTROW, RAS, CAS, EXTROW, EXTCOL and WE are instrumental in the selection of data to be presented on the screen. These signals are keyed to the horizontal line position shown in the center of the timing waveforms depicted in Fig. 7. Additionally HROMs 248, 249, 250 generate a V sample strobe (Fig. 2) and clamp pulses (Fig. 5). In this embodiment and as indicated above, the leading edge of the horizontal synchronization pulse (HSYNC, Fig. 7) on the incoming signal resets the horizontal counter chain 222 to a preset code of−44. The horizontal counter chain 222 then counts up to the value of 8 counts past zero (Fig. 7) at which point the left-hand edge of the picture starts. The chain 222 counts until the count 240 is reached when the picture is blanked again. Thus count 8 is the leading edge of the picture and count 240 is the trailing edge of the picture. This defines the modified horizontal blanking signal of this embodiment (Fig. 7). This produces a narrower picture width than is normal on a standard television screen. The normal picture as provided by the NTSC horizontal blanking signal would be approximately from the count of zero to the count of 248 (Fig. 7).

Hex Flip Flop integrated circuit 240 of synchronization separation circuitry 239, along with Flip Flops 242, 243, 244, NAND-gates 245, 246, 254, 255, OR gate 247, 256, 257 and AND-gates 290, 291, 292 receive a composite synchronization signal (CSYNC) from the video tape recorder and also VSAMPLE, modified HBLANK*, CLAMP 1*, CLAMP 2* from the HROMs 248, 249, 250, and VBLANK* from VROM 265 (described below). The Flip Flop 244 outputs a FIELD INDEX signal. The FIELD INDEX signal identifies the field. It is low during the first field and high during the second field and changes at a point just after the vertical synchronization signal. The vertical synchronization signal (VSYNC) is separated from CSYNC by Hex Flip Flop 240, NAND gate 245, 246 and OR gate 247. This VSYNC signal causes the vertical counter chain 260 (described below) to be loaded with a preset negative value. CLAMP 1* and VSYNC inputs are provided to AND gate 290 which outputs a CLAMP 1 signal. CLAMP 2* and VSYNC inputs are provided to AND gate 291 which outputs a CLAMP 2 signal. HBLANK* and VBLANK* are provided to OR gate 252 which outputs a composite blanking signal (CBLANK).

For the synchronization separation circuitry 239, samples of CSYNC are clocked into FLIP FLOPS 242, 243. Which even FLIP FLOP 242, 243 sees the VSYNC portion of CSYNC change first is set and the other FLIP FLOP is put into reset. The above clock signals to FLIP FLOP 242, 243 are true and false versions of DELAYED VSAMPLE produced by NAND-gate 254.

FLIP FLOP integrated circuit 240 is used as a pair of shift registers and is clocked by HBLANK*. This synchronizes the output of FLIP FLOP 242, or FLIP FLOP 243 to the next edge of the HBLANK* signal. NAND-gates 245, 246 produce a pulse from this leading edge of the detected VSYNC, which sets or clear FLIP FLOP 244 to produce the Field Index signal described above.

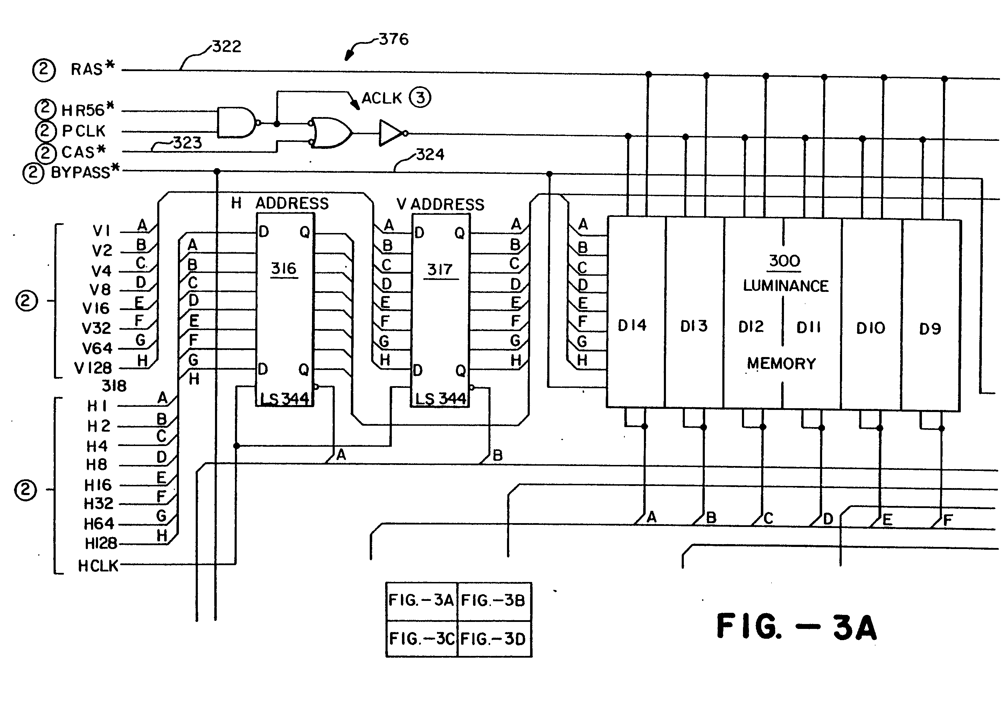

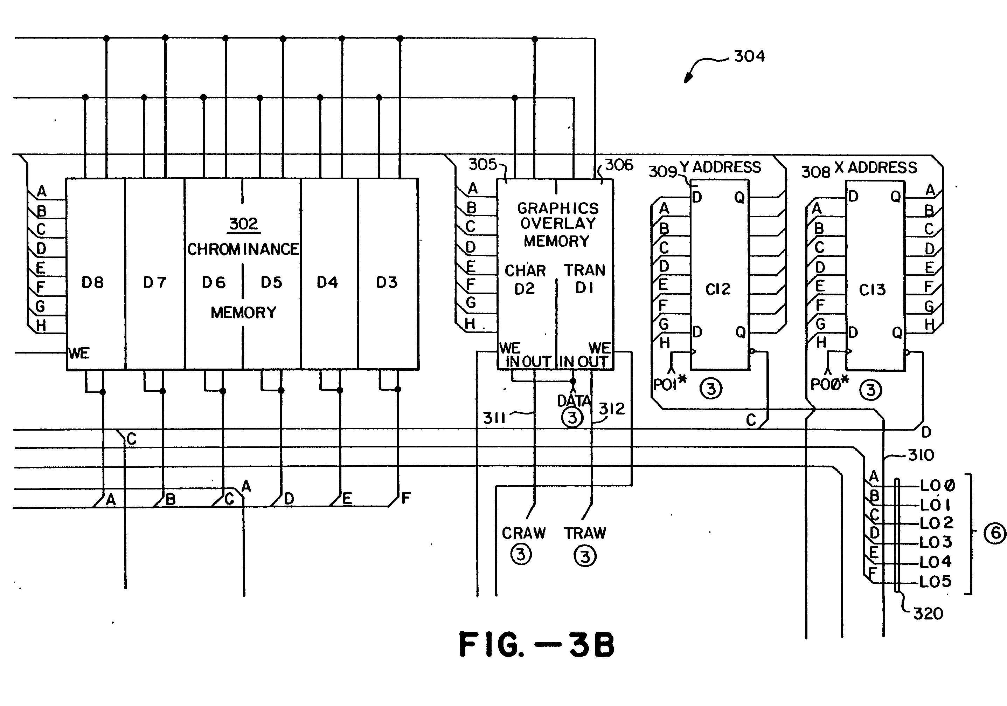

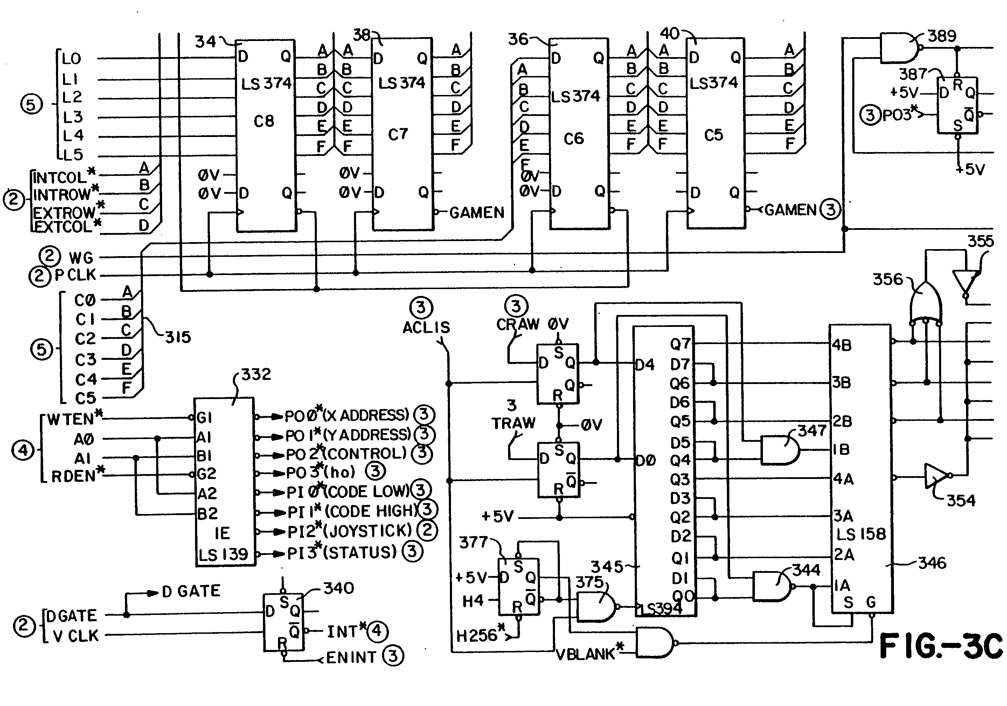

The vertical counter chain 260 (Fig. 2) is comprised of three synchronous four-bit counters 261, 262, 263 which are loaded with a preselected count when a load signal (VSYNCH) is given from OR gate 247 and which are clocked by a signal from inverter 210 which also clocks the horizontal chain counter 222. The output from vertical counter chain 260 is provided to output line 264 and provided therefrom to vertical address latch 317 (Fig. 3) for the video buffer 32. The vertical counter chain 260 counts down from the vertical synchronization interval and handles such timing functions as the location of the horizontal scan lines including the horizontal scan lines which are in the blanked portion of the top of the picture and which contain a digital instructions and program (referred to above with respect to Figure 8). The vertical counter chain 260 determines the horizontal start and the end lines of the picture. Additionally the output of the vertical counter chain 260 addresses the vertical ROM (VROM) 265. Signals output from the VROM 264 include vertical interval gate (VGate) and vertical interval blanking (VBlank). The VGATE signal gate off the audio sample pulses during VSYNC switching for noise suppression. The VBLANK signal is a standard vertical blanking signal for picture blanking.

In Fig. 2 a quadruple 2 to 1 multiplexer 266 is located immediately below VROM 265. Multiplexer 266 receives a FIELD INDEX signal generated from Flip Flop 244 and an inverted FIELD INDEX signal from inverter 267. Additionally, multiplexer receiver an AUDIO A and an AUDIO B recovery pulses or audio gates (Fig. 7) from latches 251, 252 provided from HROMs 248, 249, 250. A TRACK signal provided to multiplexer 266 controls the switching between AUDIO A and AUDIO B recovery pulses and the inverted FIELD INDEX signals. Track is an output from a control register 330 (Fig. 3) of the microprocessor unit 48 which accomplishes this switching responsive to which field is selected by the joystick unit 52.

The output of multiplexer 266 is provided to logic circuitry 268 (track select logic, Block 22, Figure 1) which is comprised of OR gate 269, AND gate 271, NAND gates 272, 273 and inverters 274, 275 and which output signals BYPASS and AUDIOP. The BYPASS signal relates to whether the digital field is in the direct-through mode (passing directly from latches 34, 36 to latches 38, 40, Fig. 1) or the playback mode (played from video buffer 32). A high BYPASS signal indicates the use of the direct-through mode.

From multiplexer 266 the FIELD INDEX signal or the inverted FIELD INDEX signal depending on the TRACK signal is provided to an AND gate 272 along with an inverted signal from OR gate 269. OR gate 269 is provided with the VGATE signal from VROM 265 and a horizontal count signal from horizontal counter chain 222. These signals determine the BYPASS signal.

The selection by multiplexer 266 between the AUDIO A and the AUDIO B recovery pulse is also made by the TRACK signal which depends on the joystick unit 52 input, and is provided to AND gate 271 along with the VGATE signal from VROM 265. The signal from AND gate 271 is provided to AND gate 273 which provides an output signal Audio P depending on the second input game enable signal (GAMEN). GAMEN is a bit set in the control latch 330 (Fig. 3) by the microprocessor unit 48. The GAMEN pulse blanks both the audio and the video signal (described below) under command of the microprocessor unit 48 at such time as the initial tape lead in and also as part of the game function when the microprocessor unit 48 can lock out the game and force the player to return to the start of the game for, for example, nongame play for a specified period of time or failure to obtain a correct answer after a specified number of attempts.

The joystick unit 52 of Fig. 1 is shown in greater detail on the lower left-hand corner of Fig. 2. The joystick unit includes operational amplifier 276, comparators 278 and 279, AND-gates 280 and 281, OR gate 282, octal latch 283 and joystick 284. The function of the circuit is to provide a linear sawtooth waveform whose period is equal to the horizontal period of the horizontal scan line. The sawtooth waveform is reset by the signal which is given by the label G, which is the horizontal blanking interval provided by the HROMs 248, 249, 250. The sawtooth waveform starts at the left side of the picture, increases in value, and finishes at the right side of the picture. It is applied to the two comparators 278 and 279.

The other inputs to the comparators 278 and 279 are the outputs from potentiometers (not shown) provided in the joystick 284 which will provide the x and y positions of joystick 284. The output from the joystick in the x and y directions is compared with the sawtooth waveform in comparators 278 and 279 respectively. Depending on the input signals, the outputs from comparators 278, 279 change states in a digital manner providing a pulse edge which is sent to the subsequent NAND gate 280, 281. NAND-gates 280, 281 are, in addition, provided with signal G from the HROMs 248, 249, 250 and with a signal PLANE* in the case of NAND gate 280 and PLANE in the case of AND gate 281. It is to be noted that a signal followed by a superscript * is used to indicate the not or inverted condition for that signal.

The PLANE signal is from the control register 330 (Fig. 3) of the microprocessor unit 48. The purpose of the signal is to select between the x and y signal from the joystick 248. The two signals from the NAND gates 280, 281 are merged by OR gate 282 and output from OR gate 282 so that there is a sharp transition point. The transition point provides a high state at some point along the horizontal scan line where the ascending sawtooth waveform intersects the voltage coming off the x and y leads from the joystick potentiometers contained in joystick 284 as determined by comparators 278, 279. Accordingly, the joystick unit 52 has converted the joystick levels into a time pulse relating to the position of the joystick along and relative to the horizontal scan line presented on the screen.

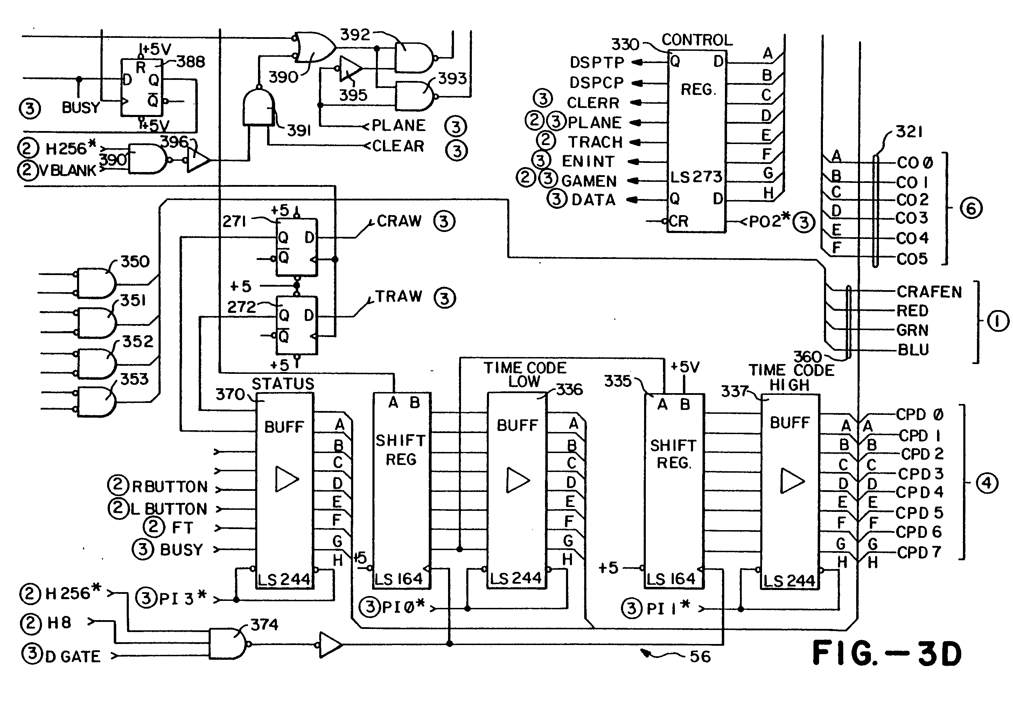

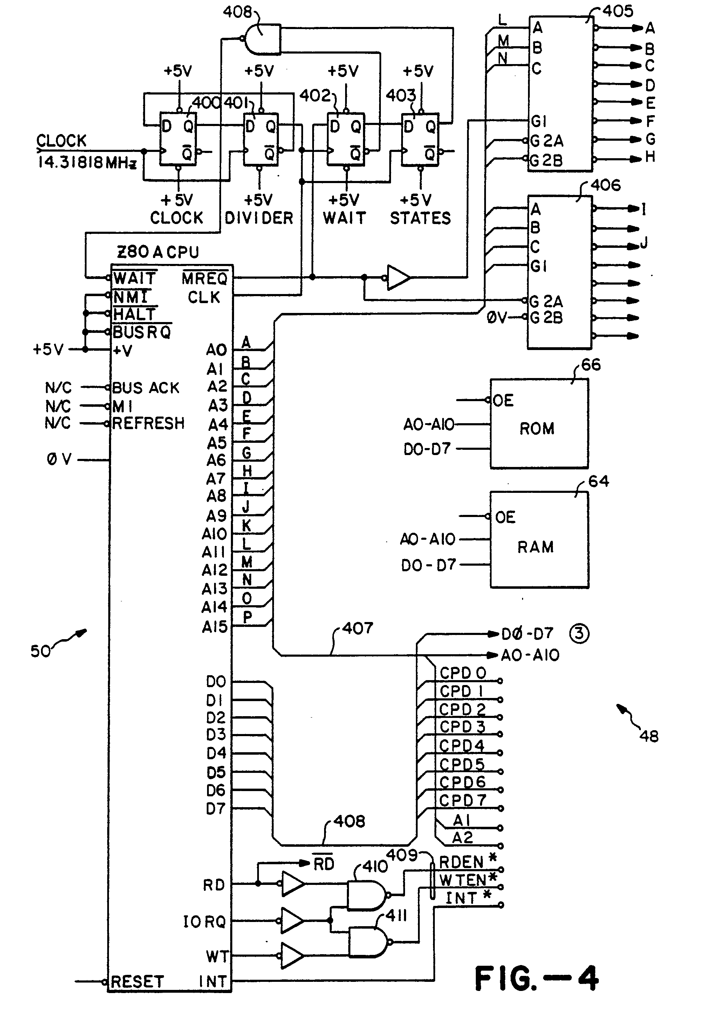

This pulse is used as a clock pulse into an octal latch 283, the inputs to which are the counts from the horizontal counter chain 222. Accordingly, the current horizontal count value which represents the joystick position is latched into octal latch 283. The joystick position is output on lines 285 and is provided bidirection bus 310 (Fig. 3) and microprocessor unit 48 (Figs. 1, 4). The horizontal count value basically climbs from a value of 0 to a value of 255 as the horizontal scan line proceeds across the screen. The captured horizontal count number, which is proportional to the offset of the joystick, can then be read as the joystick position by the microprocessor using a decoded strobe signal $PI_2$* from I/O port decoder 332 (Fig. 3) on line 286. Thus the above joystick interface 48 provides for simple method of multiplexing two joystick voltage outputs and capturing a conveniently available numerical value for the joystick position.

Video buffer unit

The luminance and chrominance memories 300, 302 store the luminance and chrominance signals from the field selected to be viewed. The video signal is provided through Block 14 (Fig. 1) to luminance and chrominance demodulator, Block 28. From there it is provided to Block 30 (Blocks 28, 30 are described below with reference to Fig. 5) where the luminance and chrominance signals are split apart and each is separately digitized. The chrominance signal is in fact split into two different chrominance signals. The reason for this is that the chrominance signal has a smaller bandwidth than does the luminance signal, as there is much less detailed information in color across the width of a picture than there is in black and white. The two chrominance signals are then digitally sampled at half the sampling rate of the luminance signals. In a preferred embodiment, the luminance signal is sampled at a rate of about 4.7 MHz with the two chrominance signals sampled at a time interleaved sample rate of 4.7 MHz. The digital information resulting is provided to data latches 34, 36 (Figs. 2, 3) from block 30 through luminance signal lines 314 and chrominance signal lines 315 (Fig. 3).

The data is loaded into luminance and chrominance memories 300, 302 as addressed through column (horizontal) address latch 315 and row (vertical) address latch 317. Address signals are provided to latch 316 from horizontal counter chain 222 (Fig. 2) and to latch 317 from vertical counter chain 260 (Fig. 2) by lines 318, 319 respectively.

Data from memories 300, 302 is stored in latches 38, 40 (Fig. 3) respectively prior to being output through lines 320, 321 respectively.

The RAS* (row address store) line 322, CAS* (column address store) line 323, and WE (write enable) line 324 operate the above various latches and memories as is known in the art. The INTCOL*, INTROW*, EXTROW*, and EXTCOL* signals on line 326 operate column address register 316, row address register 317, Y address register 309 and X address register 308 (for the below described graphics memory 304) respectively as is known in the art.

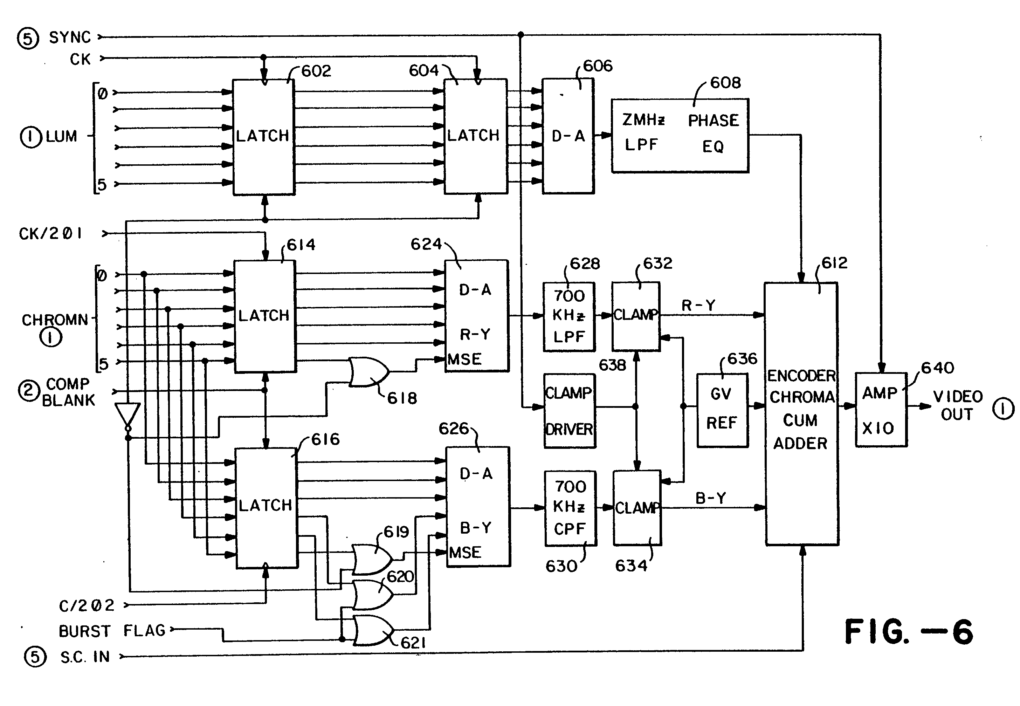

As is evident from Figs. 1, 3, the luminance and chrominance signals on latches 34, 36 are transferred directly to latches 38, 40 as well as to field memories 300, 302 for reasons set out below. From latches 38, 40 the signals pass to block 42 where the signals pass through digital-to-analog converters and are remodulated to restore the digital information back to an NTSC color video signal (Figs. 1, 6). In block 46 the graphics data from the graphics memory 304 is decoded and inserted over the video signal and provided to screen 68.

In operation, at least first and second series of interleaved fields are provided on the media, with each series of fields comprising with a different answer or plot to the video story if the luminance and chrominance signals in the first field are to be displayed, it is provided directly from latches 34, 36 to latches 38, 40 in real time into the restoration circuitry of block 42. Simultaneously the luminance and chrominance signals are sent to the video buffer 32 and in particular to luminance and chrominance buffers 300, 302. The second field, which has data that is not selected to be presented on screen 68, is prevented from passing through the latches 34, 36. The first field stored in video buffer 32 is then read out to take the place of the blocked out second field. In fact the selected first field can be played repetitively until such time as new video signals are acquired from the video media.

One of the reasons for accomplishing this selection between the first field and the second field in the above manner is that the signals which appear on screen 68 have gone through the same digital (A/D) encoding (block 30, Fig. 1) and the same digital (D/A) decoding (block 42, Fig. 1). Consequently the same signal is passed through between latches 34, 36 to latches 38, 40 as is stored in video buffer 32 with all the same modification resulting in no flickering of the video output on screen 68 due to the pass through signal being different from the stored signal.

If instead of two different fields, six fields, for example, were stored, any one of the fields could be selected to the exclusion of the remaining five fields and played directly through the latches and simultaneously stored on video buffer 32 for replay in substitution for each of the other five nonselected fields.

Additionally several video buffers such as buffer 32 (Fig. 1) with appropriate latches such as latches 34, 36, 38, 40 could be added to controller 10 so that additional frames can be selectively stored as desired.

In Fig. 3, a graphics overlay memory 304 which is provided data from the CPU 50 as is encoded on the tape medium and which includes character memory 305 and transient memory 306, and along with luminance and chrominance memories 300, 302, comprise the video buffer 32. In a preferred embodiment, video buffer 32 is comprised of a plurality of dynamic RAMs that are configured as 64K×1 RAMs. Latches 316, 317 provide a common address to all of the memories 300, 302, 304. Additionally, these memories can be addressed by the above latches 308, 309 which are addressed on bidirectional bus 310 from the microprocessor unit 48. The above signals (Fig. 7) Internal Column (INTCOL*), Internal Row (INTROW*), External Column (EXTCOL*), and External Row (EXTROW*) on line 326 generated by HROMs 248, 249, 250 (Fig. 2) do not permit more than one of the latches to output the common address line at the same time.

In this embodiment, luminance and chrominance memories 300, 302 are written to or read from and graphics overlay memory 304 is read from during the active horizontal interval of the horizontal scan line. During the horizontal retrace interval of the horizontal scan line, octal latches 308, 309 are contributing X and Y addresses to the graphics overlay memory 304 as controlled by above EXTCOL* and EXTROW* signals on the timing diagrams (Fig. 7). The octal latches 308, 309 are then active to provide addresses to the graphics overlay memory 304 in order to accept graphics data, which addresses and data have been written thereto by the microprocessor unit 48.

The character memory 305 stores textual information, while the transient memory 306 stores such things as lines, arcs, geometric figures and the like with are to overlay the characters so that they may be independently changed or erased without destroying the characters. Accordingly, there are two independent overlay graphics planes. If a character string is to be written on the screen 68, overlaying any video picture provided through luminance memory 300 and chrominance memory 302, this character string is written pixel by pixel, one pixel her horizontal scan line interval during the horizontal retrace interval to an address in memory 305. The data to graphics overlay memory 304 is provided by data lines 311, 312 from microprocessor unit 48.

For video buffer output the vertical or row address latch 317 provides the vertical address and is only active just before the left border of the picture. The vertical or row address is passed to the memories 300, 302, 304 and is strobed into the memories by the RAS* signal. In this preferred embodiment, the memory 300, 302, 304 operate in extended page mode. In extended page mode in dynamic memories, it is necessary only to provide a row address only at infrequent intervals. In this case the interval is equivalent to one horizontal scan line interval. Accordingly the vertical or row address is strobed into the buffers 300, 302, 304 just prior to the start of the picture, and referring to Fig. 7, it can be seen that the RAS* (along with INTROW) line has a pulse just prior to the start of the picture, for reading out from the memories 300, 302, 304 to the screen.

In fact as can be seen in Fig. 7, there are two RAS* pulses during the horizontal interval. The first RAS* pulse in time operates with the CAS* signal in order to write graphics data into the graphics memory 304 at the X and Y addresses from the octal latches 308, 309. In this embodiment, CAS* signals also transitions at every pixel for the entire width of the page so as to strobe video data from the media into memory.

In Fig. 3, below the octal latches 308, 309 is a control register 330 which has data which is set by the microprocessor unit 48 by bidirectional bus

310 and which outputs controls as follows. The first output is labeled DSPTP which stands for display transient plane strobe. It is a control bit which enables the entire transient plane to be displayed or blanked. The DSPCP or display character plane strobe is the second control and operates similarly to the DSPTP signal. The third control is a clear bit which is set and maintained for an entire vertical interval and causes the entire character or transient memories 305, 306 to be cleared, depending or which is selected using PLANE. The PLANE signal selects which of the joystick inputs to NAND gates 280, 281 (Fig. 2) is to be read for purposes of multiplexing the X plane and the Y plane joystick inputs. The PLANE signals, as will be discussed below, also determine read/write operations for of the graphics overlay memory 304. The TRACK signal controls whether the first or second track of the media is being displayed. This TRACK signal is provided to multiplexer 266 (Fig. 2) and determines which field is selected by the choice of the FIELD INDEX signal and which AUDIO signal is selected. The TRACK signal causes the BYPASS* signal to be generated which, as can be seen in Fig. 3, can selectively block video data from passing through latches 34, 36 and can selectively allow video data to pass through latches 34, 36 and be written to memories 300, 302. As can be seen in Fig. 3, the BYPASS* signal is provided to the write enable pin of the memories 300, 302. If more than two tracks were provided on the media, additional strobe bits would be required for the added multiple options. The ENINT signal is the enable interrupt signal, and this is a flag bit or control bit which permits interrupts to be generated. This interrupt is active at the time that data is received and will interrupt anything in progress and cause an interrupt routine to be exercised which will deal with the incoming data. The GAMEN signal or game enable signal is the previously explained pulse which outputs the audio signal from AND gate 273 (Fig. 2) and the video signal from registers 38, 40. GAMEN can prevent further output if more than a predetermined number of game play errors are made by the player or if the player stops game play completely. The DATA signal is a one-bit signal which is written into the character or transient planes of memories 305, 306 as selected by the PLANE signal (discussed below). If the DATA signal is high and the PLANE signal is high, then a bit will be written into the appropriate pixel location of the character memory at the X, Y location as addressed by the X, Y latches 308, 309. If PLANE is set low, then the writing will be done to the transient memory 306 instead of the character memory 305. If the DATA bit is set low, then the bit will be erased in the memory selected by the PLANE signal.

In the lower left-hand portion of Fig. 3, the I/O port decoder 332 for the microprocessor unit 48 is depicted. This port decoder is comprised of two 2×4 decoders. The signals input from the microprocessor unit 48 which is shown in Fig. 4 are WIEN*, A0, A1 and RDEN* and will be discussed below with Fig. 4. The outputs of the decoder include signals PO0* through PO3* and PI0* through PI3*. Output PO0* gives a strobe which latches an address from microprocessor unit 48 into the X address latch 308, while the PO1* gives a strobe which latches an address from microprocessor unit 48 into the Y address latch 309. The PO2* clocks the control register 330. PO3* sets FLIP FLOP 387 causing the BUSY signal to be active. This is clocked through FLIP FLOP 388 by EXTROW* and then combined with WE to ultimately load the selected memory 304 and also clear the BUSY signal. This assures that the X,Y address has been loaded and the microprocessor 50 has commanded a write prior to EXTROW* which is prior to WE. Thus a complete write cycle to memory 304 is assured without the risk of initiating the write cycle too late. If PO3* is late, the controller 10 will wait for the next horizontal blanking internal. The ports PI0* to PI3* consist of time code low, time code high, joystick and status strobes. The PI2* strobe enables the output of the joystick position from latch 283 (Fig. 2) to the bidirectional bus 310 of CPU 50. The PI3* strobe enables the status buffer 370 (Fig. 3) output.

In Fig. 1, to the right of luminance and chrominance (A/D) encoder, Block 30, is Block 56, which provides for the digital data recovery and time codes. This is concerned with recovery of the digital program and time code data which is stored in the vertical blanked interval and providing the data to the microprocessor unit 48. Block 56 provides data and interrupt signals to the central processing unit of CPU 50 of microprocessor unit 48 which also takes input from joystick unit 52 (Figs. 1, 2).

The code low and code high strobes control some of the circuitry in box 56 of Fig. 1 as is shown in greater detail in the lower right-hand portion of Fig. 3. In this figure, two shift registers 334, 335 are depicted along with two octal buffers 336, 337 which are identified by the designation time code low and time code high. These octal buffers have three-state outputs. The outputs of the buffers are controlled by the PI0* and the PI1* signals from the port decoder 332 as these signals are applied to the control pins of the buffers 336, 337.

The input to the first shift register 334 is the most significant bit (labeled A in Fig. 3) which is provided to the luminance memory 300 over line 338. The eighth output from the shift register 334 is provided to the input of shift register 335. The most significant bit provided to the luminance memory 300 is the bit for providing digital program from the A/D converter presented in box 30 of Fig. 1 (also Fig. 5). Thus digital program data coming off of a horizontal scan line in the vertical interval part (non-video active part) of the picture is shifted into the shift register, and at an appropriate point is strobed into the computer through the shift registers 334, 335 and the buffers 336, 337 to the bidirectional data bus 310 and therefrom to the microprocessor unit 48 as determined by the PI0* time code low strobe and the PI1* time code high strobe. As can be seen in Fig. 3, inputs H256*, H8, DGATE to NAND gate 374 clock shift register 334, 335 to prevent the time code from crowding into the left and right margins where the audio signal (Fig. 8) is stored.

In Fig. 3, below the I/O port decoder 332 in the lower left-hand corner, a Flip Flop 340 is depicted. This provides a signal identified by INT* which is the inverted interrupt signal. The reset input to this Flip Flop 340 is ENINT (enable interrupt) which comes off of the microprocessor control register 330. If ENINT is high, then a DGATE signal, which comes from the ripple out pin of the vertical counter change 220 (Fig. 2) can set an interrupt flag INT* indicating that digital program data is actually present. This INT* signal goes to the microprocessor and interrupts the task in the microprocessor and causes an interrupt service routine to be used which causes I/O port decoder 332 to enable time code buffers 336, 337 so the CPU 50 can read the digital program data residing on registers 334, 335. Accordingly, this above scheme is the method for capturing digital program data off the media and shifting it through the shift registers 334, 335 and providing same to the CPU 50. It is to be remembered that CPU runs the operating system software, a script interpreter and a script, all of which comprise the digital program data which is provided to CPU 50 in the above manner.

In the center low portion of Fig. 3 is the logic circuitry 342 which accepts raw character data from the character memory 305 over line 311 at an input marked CRAW and also accepts raw transient data from transient memory 306 over line 312 at an input labeled TRAW. This data is latched into Flip Flops 343, 344, which data is then used as an input to an octal latch 345 and also provided to NAND gates 347, 348. Octal latch 345 is set up as two 4-bit shift registers. Flop Flop 377 and NAND gate 375 provide the clock strobe for latch 345.

The output of the data from latch 345 and the output of Flip Flops 347, 348 are presented to the quadruple 2 to 1 multiplexer or selector 346. This arrangement with the subsequent logic circuitry which includes AND gates 350, 351, 352, 353, inverters 354, 355 and OR gate 356 is a way of encoding the graphic attribute data so that the output are provided on four pins from lines 360 and include the signals GRAFEN for graphics enable, RED for the red signal, GRN for the green signal, and BLU for the blue signal. The three-color binary lines indicate whether the red, green or blue signals are active, and the graphics enable signal indicates whether graphics is active or not. This is presented on a pixel by pixel basis and because there are three color lines, it is possible to get eight combinations coded on the screen for any pixel. These attributes control the entire line. Thus all pixels on one line must have the same color but can be different from line to line. Also, the character and Transient planes have their own independent atrributes, hence colors. Additionally gate 348 not only indicates that pixel information is presented (as does gate 347) but also controls the selector 346 thus giving transient pixel priority over character pixels. Accordingly, the immediately above identified circuitry is involved with capturing atrribute codes from the graphics memory and converting them to color control signals and presenting these to the graphics decode circuitry, Block 46 of Fig. 1.

The digital data representing the graphics is controlled by bits of information carried in the left-hand edge of the horizontal scan line not presented on the screen. This location is shown on the ATTRIBUTES STROBES waveform as a region underneath the AUDIO A pulse on Fig. 7. These attribute strobes occur coincidentally with the AUDIO A recovery pulse and locate a reserved area for the digital data.

To the right of logic circuitry 342 (Fig. 3) is a status buffer 370 which provides status data to the microprocessor unit 48 on bidirectional bus 310. The status buffer 370 receives CRAW and TRAW data from graphics memories 305, 306 which is latched into Flip Flops 371, 372 in addition to whether a right or left input button (R-button, L-button) of the joystick is pressed, the FIELD INDEX (FI) signal telling which field the system is processing, and a busy signal (BUSY) which tells whether the screen 68 is currently being written to. When the microprocessor unit 48 is going to write to the graphics memory 304, signal PO3* from I/O port decoder 332 becomes active low and clocks Flip Flop 387 which causes the BUSY signal to go high. With the BUSY signal high, the microprocessor unit 48 can test this signal until this signal goes away. The microprocessor unit 48 thus knows that a successful write operation has been accomplished. Accordingly, latches 387, 388 are concerned with a handshake routine to the microprocessor unit 48 to enable a check to be made whether or not write has been successfully accomplished and not allow the start of a following write operation partway through the current one. Associated with the write enable, WE, signal are the above Flip Flops 387, 388 and NAND gates 389, 390, 391, 392, 393 and buffers 395, 396. This logic selects which graphics memory is to be written into under control of the PLANE signal if the BUSY signal is active. The CLEAR signal holds the WE signal active, thus flooding the graphics memory with data during one field time.

The data which is output from the graphics character memory 305 and the graphics transient memory 306 which is provided to Flip Flops 371 and 372 is the same data which is displayed on the screen 68. It is a continuous stream of data read out from these memories. The latches 371, 372 are provided with a clocked input which is the write enable (WE) strobe, the waveform for which is shown at the bottom of Fig. 7. This strobe occurs once per horizontal line. This is the strobe which is used at the time the data is written into graphics memory 304 and occurs after X, Y addresses from microprocessor unit 48 have been latched into registers 308, 309 by the EXTCOL*, EXTROW* signals.

Microprocessor unit 50

In Fig. 4, the microprocessor unit 48 is depicted. Microprocessor unit 48 includes a central processing unit, CPU50 (Fig. 1, 4), which in a preferred embodiment includes a Z80A chip. The Z80A runs on approximately a 3.5 MHz clock. This clock is derived from a 14.318 MHz signal which is divided by four Flip Flops 400, 401. The two additional Flip Flops 402, 403 and the NAND gate 404 provide wait states to slow down the instruction fetch cycle of the CPU 50 so that it is compatible with the microprocessor memory 54 which in a preferred embodiment is comprised of ROMs which are collectively identified by the number 66 as previously indicated in Fig. 1. The memory of the microprocessor unit 48 further includes a RAM as previously identified by the number 64 in Fig. 1. The microprocessor unit 48 in this embodiment operates in a manner that is well known in the art. Next to these latches are memory address decoders 405, 406 which address the memory space in the memories 64, 66. These memory address decoders 405, 406 work in the address space of the CPU 50, in contrast to the I/O port decoder 332 in Fig. 3, which works in the I/O control signal space of the CPU 50 which communicates with the I/O lines 309 of the CPU 50. Decoders 405, 406 accept the input from the address bus 407 of the CPU 50 and the memory request signal, $\overline{MREQ}$, in order to access the RAM memory 64 and the ROM memory 66. The RAM 64 stores all the digital program data received from the media as explained in the block diagram of Fig. 1 while the ROM has bootstrap programs and error detecting/correcting routines. The digital program data to be provided will come from the vertical interval (Fig. 7). The RAM 64 will contain all the software which is downloaded from the media. This would be the above indicated primitive software, the script interpreter, operating system, and the current script instructions. The CPU 50 further includes an address bus 407, data bus 408 which communicates with bidirectional bus 310 (Fig. 3).

Lines 407 provide the write enable WTEN* and the read enable RDEN* signals which are communicated to the port decoder 332 of Fig. 3. As can be seen in Fig. 4 the read enable signal, RDEN*, is provided from a combination of the read signal ($\overline{RD}$) and the IO request signal ($\overline{IORQ}$), which is provided to NAND gate 411 and the write enable signal (WTEN*) is generated from the $\overline{IORQ}$ and the write ($\overline{WT}$) signal which is provided to the NAND gate 411. Two additional inputs are provided to the port decoder 332 of Fig. 3. These are the AØ and the A1 which are two bits from the address bus 407. (Define AØ, A1).

Analog circuitry for video buffer

The analog portion of the circuitry for the controller 10 is depicted principally in Figs. 5 and 6. These figures depict the circuitry which is embodied by several of the blocks previously discussed in Fig. 1. The circuitry of Fig.5 relates to blocks 14, 28 and 30 of Fig. 1 and account for the video input buffer, synchronization stripper and video clamp of block 14, luminance and chrominance demodulator of block 28 and the luminance and chrominance A/D conversion and chrominance multiplex of block 30.

As can be seen in Fig. 5, the video input to block 14 goes into a video analog buffer and feedback clamp circuit 502. The output from the feedback clamp 502 is provided to a 2 MHz lowpass filter 504. At this point in time, we are dealing with the luminance video information. The next stage includes a video amplifier 506 which amplifies the luminance signal by a factor of 13. The output of video amplifier 506 is fed back to the feedback clamp 502. The output of the video amplifier is also provided to a synchronization stripper 508. This synchronization stripper 508 strips off the synchronization information from the luminance data and provides same to the synchronization separation circuit 239 (Fig. 2) which separates the horizontal synchronization, vertical synchronization and field index pulses. This is also shown in block 16 of Fig. 1. The synchronization stripper 508 includes a comparator (not shown) to provide a digital synchronization signal. The signal from the video amplifier 506 additionally is provided to a six-bit flash A/D converter 510, also known as a parallel A/D converter. In a preferred embodiment, A/D converter 510 is comprised of an RCA chip CA3300. This is where the analog signal is placed in a digital form six bits deep and sampled at a rate of approximately 4.7 MHz. The output of the A/D converter 510 is latched into hex latch 512. The output from the hex latch 512 is then clocked through subsequent latches 514 and 516 to form a delay of the luminance signal so as to actually match the chrominance signal which has a longer delay period because of the low-pass filter (described below) which has been used for the chrominance signal. From latch 516, the luminance signal is provided to Block 34 of Fig. 1.

The output from the video analog buffer and feedback clamp circuit 502 is also provided to a 3.5 MHz bandpass filter 518. This filter essentially pulls out the chrominance data. From bandpass filter 518, the chrominance signal goes to subcarrier regenerator and demodulator 520 (Block 28, Fig. 1). In a preferred embodiment, the subcarrier regenerator and color signal demodulator 520 is comprised of a RCA chip C3151E. The regenerator and demodulator 520 provides two color signals R—Y, B—Y which contain all of the chrominance data. These two signals are then provided to 700 kHz lowpass filters 522, 524. The output from the lowpass filters 522, 524 are then provided to driven clamps 526, 528. The clamps 526, 528 establish a reference level. This reference level is the half-ladder point in the chrominance six-bit flash A/D converter 530. This half-ladder signal is provided through operational amplifier 532 to the clamps 526, 528.

Once these two signals are clamped accurately, they are provided to a high-speed analog switch 534, where analog multiplexing (Block 30, Fig. 1) occurs so that the R—Y and the B—Y signals can be alternately digitized by the six-bit flash A/D converter 530. By this process, the two-color signals are again stepped into a single signal path. The data output from the A/D converter 530 is provided to latch 536 and therefrom to latch 36 of Fig. 1. The clock signals required for this chrominance multiplexing are derived from the oscillator previously described, which is a 4.7 MHz clock. The two clock signals which drive the high speed switch 534 are derived by dividing this clock pulse by 2.

Also Fig. 5 depicts an audio decoder 540. Because of the format that is being used to encode the audio signal onto the video signal, the audio is essentially an analog signal that is sampled at every horizontal interval. This occurs for about 1.5 microseconds on the front porch and the back porch of the horizontal blanking intervals for each track which has been laid down on the media.

The next step for the analog circuitry is to reconstruct from the digital data an analog signal in NTSC format. This is accomplished by block 42 of Fig. 1 which is more fully depicted in Fig. 6. In Fig. 6 the luminance signal is provided from latch 38 (Fig. 1) to hex latch 602 and therefrom to hex latch 604. These latches provide for a compensating delay due to the fact that the chrominance signal will have a longer delay period due to the lowpass filters (described below) than does the luminance signal. The output from the latch 604 is provided to the D/A converter 606 which in a preferred embodiment comprises a DAC-08 manufactured by Precision Monolithics. A signal from the D/A converter 606 is provided to a 2 MHz lowpass filter and phase equalizer 608. The output therefrom is a reconstructed luminance signal that has no synchronization. This signal goes to the encoder and chrominance, luminance adder circuit 612 (described below).

The chrominance signal from latch 40 in Fig. 1 is provided to hex latches 614, 616 of Fig. 6 which are part of the Block 42 of Fig. 1. The clocks which drive these latches 614, 616 are the same clocks referred to above which accomplish the high-speed switching of switch 534. The phase which is used to clock the latches 614, 616 will determine whether the R—Y signal or the B—Y signal will be captured by the latches. In this embodiment latch 614 is clocked with phase 1 and latch 616 is clocked with phase 2. This is how the multiplex chrominance channel is digitally demultiplexed. It is to be understood that the six-bit data path with successive digital R—Y and B—Y signals will be decoded digitally so as to provide separate six-bit data paths which represent the R—Y color component and the B—Y color component. These are the two analog signals which contain all color information in a NTSC color signal.

The additional OR gates 618, 619, 620, 621 perform a blanking function so that during the horizontal and vertical blanking there are no noise components. As can be seen in Fig. 6, a blanking signal is provided to OR gates 618, 619. A color burst flag is provided to OR gates 620, 621 to add a digitally regenerated color burst into the B—Y channel, which color burst signal sits on the back porch of every horizontal interval in the standard NTSC signal. This signal was originally stripped from the chrominance signal and is now added back in prior to the display on the screen 68.

The signals from the latches 614, 616 are provided to D/A converter 624, 626. These converters are similar to D/A converter 606. From these converters, the analog chrominance signal is provided to 700 kHz lowpass filters 628, 630. These signals are clamped by clamps 632, 634 to a reference which in a preferred embodiment is a 6-volt reference provided by Block 636. Clamps 632 and 634 are driven by clamp driver 638. The 6-volt reference is an integral part of the encoder 612. The clamp driver 638 is a 5 to 12-volt converter. In this embodiment, composite synchronization is used as the clamping pulse for the chrominance signal.

The signals from clamps 632, 634 which include the R—Y and B—Y signals are provided to the single chip encoder 612, which in a preferred embodiment is designated LM 1889 and is manufactured by National Semiconductor. This decoder chip 612 adds the chrominance signal with the luminance signal and produces a composite signal which goes to the output amplifier 640.

Accordingly, the basic process of Fig. 6 is the conversion of the digital signal to analog signal that is seen on the screen.

In Block 46, the graphics output on line 360 (Fig. 3) is decoded into analog signals and added to the signals generated by the circuitry of Fig. 6. This composite signal is then provided to a video analog output buffer and to screen 68.

Other aspects and advantages and objects of the invention can be obtained from a review of the claims and the figures.

## Claims

1. An interactive video controller for selecting between a plurality of video tracks of video data interleaved in a predetermined manner as a single predetermined and continuous input video signal containing video data of different tracks at different times comprising:

means (14) for receiving said input video signal;

selection means (22) for selecting one of said plurality of video tracks;

memory means (26) responsive to said selection means (22) for storing video data of the currently selected video track during the times said input video signal contains video data of the selected video track; and

means (46) responsive to said memory means (26) for providing a continuous output video signal consisting of video data from the currently selected video track.

2. The interactive video controller of claim 1 including:

means (28) for separating the input video signal into a luminance signal and a chrominance signal;

means (30) for digitizing the luminance signal prior to directly outputting and storing same;

means (30) for digitizing the chrominance signal prior to directly outputting and storing same.

3. The interactive video controller of claim 2 wherein:

said memory means (26) including a luminance memory (300) for storing the digitized luminance signal and a chrominance memory (302) for storing the digitized chrominance signal.

4. The interactive video controller of claim 2 including:

means (518) for demodulating the chrominance signal;

means (520) for separating the demodulated chrominance signal into a least a first primary color signal and a second primary color signal;

means (534) for multiplexing the first primary color signal with the second primary color signal; and

said digitizing means (530) for digitizing the multiplexed chrominance signal.

5. The interactive video controller of claim 2 including:

means (606) for converting the directly output and the stored digitized luminance signal into an analog luminance signal;

means (624, 626) for converting the directly output and the stored digitized chrominance signal into an analog chrominance signal;

means (612) for adding, encoding and remodulating the luminance and chrominance signals.

6. The interactive video controller of claim 2 including:

means (606) for converting the directly output and the stored digitized luminance signal into an analog luminance signal;

means (614, 616) for demultiplexing the directly output and the stored digitized first primary color signal and the digitized second primary signal;

means (624) for converting the directly output and the stored digitized first primary color signal into an analog signal;

means (626) for converting the directly output and the stored digitized second primary signal into an analog signal;

means (612) for adding, encoding and remodulating the luminance signal and the first and second primary color signals.

7. The interactive video controller of claim 1 wherein at least one of the tracks has audio data encoded thereon, including:

means (540) for decoding the audio signals.

8. The interactive video controller of claim 1 wherein the two or more tracks contain two or more separate audio signals, including:

means (266) responsive to track selection means for selecting one of the audio signals;

means (540) for decoding the selected audio signal.

9. The interactive video controller of claim 1 including:

a microprocessor unit (48) for generating a graphic display output responsive to the player input means.

10. The interactive controller of claim 1 wherein:

at least one of the tracks includes an audio signal;

at least each field of one of the tracks is comprised of a plurality of horizontal scan lines which have an active video interval and an inactive retrace interval; and

the audio signal is provided on the inactive retrace interval.

11. The interactive controller of claim 1 including:

a data processor (50); and wherein

at least one track includes coded instructions for the data processor; and wherein

each field is comprised of a first plurality of horizontal scan lines defining an active video vertical interval and a second plurality of horizontal scan lines defining an inactive blanked vertical interval; and wherein

the coded instructions are provided on the second plurality of horizontal scan lines in the inactive blanked vertical interval.

12. The interactive controller of claim 10 wherein:

the audio signal is a digital signal.

13. The interactive controller of claim 10 wherein:

the audio signal is an analog signal.

14. The interactive video controller of claim 1 wherein said predetermined and continuous input video signal is comprised of fields of the plurality of video tracks interleaved in a predetermined manner, each field of all video tracks also containing sound information for a plurality of audio tracks, and further comprised of audio means coupled to said means for receiving said single input video signal for providing an audio signal of one of said audio tracks comprised of the corresponding sound information from all video track fields and responsive to the selected video track.

15. The interactive video controller of claim 14 wherein said predetermined and continuous input video signal is comprised of a plurality of video tracks equal to (N) and wherein each track (n) is comprised of the n, N+n, 2N+n, 3N+n ... fields of said predetermined and continuous input video signal where n ranges from 1 to N.

16. The interactive video controller of claim 14 wherein the number of audio tracks and video tracks are equal.

17. The interactive video controller of claim 14 wherein the number of audio tracks and video tracks are unequal.

18. The interactive video controller of claim 1 for selecting between a plurality of video tracks of video data comprising interleaved fields of the plurality of video tracks.

19. The interactive video controller of claim 18 wherein said means (46) responsive to said memory means for providing an output continuous video signal is also responsive to said means (14) for receiving said single input video signal and said selection means (22) to provide, as part of said continuous output video signal, fields of the selected video track from said means (14) for receiving said single input video signal during the times said input video signal contains video data of the selected track.

20. The interactive video controller of claim 19 further comprised of means (30) for converting said fields of the selected video track during the times said input video signal contains video data of the selected track to a form directly storable in said memory means (32) and means (42) for converting said fields back to the form of said continuous output video signal, whereby all fields of said continuous output video signal have been subjected to substantially the same processing prior to forming part of the output continuous video signal.

21. The interactive video controller of claim 18 further comprised of graphics means (304) for adding graphics information to the video data of said continuous output video signal.

22. The interactive video controller of claim 21 wherein said graphic means (304) is responsive to a manual controller.

23. The interactive video controller of claim 1 further comprised of graphics means (304) for adding graphics information to the video data of said continuous output video signal.

24. The interactive video controller of claim 23 wherein said graphics means (304) is responsive to a manual controller.

25. The interactive video controller of claim 1 wherein said means (14) for receiving said video signal is a receiver means for receiving an over the air signal.

26. The interactive video controller of claim 25 further comprised of a video tape playback unit coupled to said means (14) for receiving said input video signal to provide said single predetermined and continuous input video signal thereto.

**Patentansprüche**

1. Interaktives Video-Steuergerät zum Wählen aus einer Mehrzahl von Videospuren von auf bestimmte Weise aufeinanderfolgenden Videodaten als einzelnes, bestimmtes und kontinuierliches Video-Eingangssignal, welches zu verschiedenen Zeiten Videodaten von verschiedenen Spuren aufweist, enthaltend:

Mittel (14) zum Empfang dieses Video-Eingangssignals;

Wählmittel (22) zum Wählen einer der Spuren aus dieser Mehrzahl von Videospuren;

von diesen Wählmitteln (22) gesteuerte Speichermittel (26) zum Speichern von Videodaten der momentan gewählten Videospur, solange das Video-Eingangssignal Videodaten der gewählten Spur enthält; und

von diesen Speichermitteln (26) gesteuerte Mittel (46), zur Abgabe eines kontinuierlichen Video-Ausgangssignals, welches aus Videodaten der momentan gewählten Videospur besteht.

2. Interaktives Video-Steuergerät nach Anspruch 1, enthaltend:

Mittel (28) zur Aufteilung des Video-Eingangssignals in ein Luminanzsignal und ein Chrominanzsignal;

Mittel (30) zur digitalen Umsetzung des Luminanzsignals vor der direkten Ausgabe und Speicherung desselben;

Mittel (30) zur digitalen Umsetzung des Chrominanzsignals vor der direkten Ausgabe und Speicherung desselben.

3. Interaktives Video-Steuergerät nach Anspruch 2, worin:

die Speichermittel (26) einen Luminanzspeicher (300) zur Speicherung des digitalisierten Luminanzsignals und einen Chrominanzspeicher (302) zur Speicherung des digitalisierten Chrominanzsignals aufweisen.

4. Interaktives Video-Steuergerät nach Anspruch 2, welches

Mittel (518) zur Demodulation des Chrominanzsignals;

Mittel (520) zur Aufteilung des demodulierten Chrominanzsignals in mindestens ein erstes Primärfarbsignal und ein zweites Primärfarbsignal;

Mittel (534) zur Multiplexübertragung des ersten Primärfarbsignals zusammen mit dem zweiten Primärfarbsignal; und

die erwähnten Mittel (530) zur digitalen Umsetzung des Multiplex-Farbsignals aufweist.

5. Interaktives Video-Steuergerät nach Anspruch 2, welches

Mittel (606) zer Umsetzung des direkt ausgegebenen und des gespeicherten dititalisierten Luminanzsignals in ein analoges Luminanzsignal;

Mittel (624, 626) zur Umsetzung des direkt ausgegebenen und des gespeicherten Chrominanzsignals in ein analoges Chrominanzsignal;

Mittel (612) zur Addition, Codierung und Remodulation des Luminanz- und Chrominanzsignals aufweist.

6. Interaktives Video-Steuergerät nach Anspruch 2, welches

Mittel (606) zur Umsetzung des direkt ausgegebenen und des gespeicherten digitalisierten Luminanzsignals in ein analoges Luminanzsignal;

Mittel (614, 616) zum Multiplex-Empfang des direkt ausgegebenen und des gespeicherten digitalisierten ersten Primärfarbsignals und des digitalisierten zweiten Primärsignals;

Mittel (624) zur Umsetzung des direkt ausgegebenen und des gespeicherten digitalisierten ersten Primärfarbsignals in ein Analogsignal;

Mittel (626) zur Umsetzung des direkt ausgegebenen und des gespeicherten digitalisierten zweiten Primärsignals in ein Analogsignal;

Mittel (612) zur Addition, Codierung und Remodulation des Luminanz- und des ersten und zweiten Primärfarbsignals aufweist.

7. Interaktives Video-Steuergerät nach Anspruch 1, bei welchem

mindestens eine der Spuren codierte Audiodaten enthält, und welches

Mittel (540) zur Decodierung der Audiosignale aufweist.

8. Interaktives Video-Steuergerät nach Anspruch 1, bei welchem

die zwei oder mehr Spuren zwei oder mehr gesonderte Audiosignale enthalten, und welches von Spurwählmitteln gesteuerte Mittel (266) zum Wählen eines der Audiosignale; (und)

Mittel (540) zur Decodierung des gewählten Audiosignals aufweist.

9. Interaktives Video-Steuergerät nach Anspruch 1, welches

eine Mikroprozessoreinheit (48) aufweist, die an ihrem Ausgang eine Graphikanzeige erzeugt, die vom Wiedergabeeingang gesteuert ist.

10. Interaktives Steuergerät nach Anspruch 1, bei welchem

mindestens eine der Spuren ein Audiosignal enthält;

mindestens jedes Teilbild auf einer der Spuren aus einer Anzahl horizontaler Abtastzeilen mit einem aktiven Videoteil und einem inaktiven Rücklaufteil besteht, und

sich das Audiosignal im inaktiven Rücklaufteil befindet.

11. Interaktives Steuergerät nach Anspruch 1 mit einem Datenprozessor (50); bei welchem

mindestens eine Spur codierte Instruktionen für den Datenprozessor enthält; bei welchem

jedes Teilbild aus einer Mehrzahl erster horizontaler Abtastzeilen besteht, welche ein aktives Video-Vertikalteil definieren, und aus einer Anzahl zweiter horizontaler Abtastzeilen, welche in inaktives Dunkeltast-Vertikalteil definieren; une bei welchem

die codierten Instruktionen sich auf der zweiten Anzahl horizontaler Abtastzeilen im inaktiven Dunkeltast-Vertikalteil befinden.

12. Interaktives Steuergerät nach Anspruch 10, bei welchem das Audiosignal ein digitales Signal ist.

13. Interaktives Steuergerät nach Anspruch 10, bei dem das Audiosignal ein analoges Signal ist.

14. Interaktives Video-Steuergerät nach Anspruch 1, bei welchem dieses bestimmte, kontinuierliche Video-Eingangssignal aus Teilbildern der verschiedenen Videospuren besteht, die auf bestimmte Weise aufeinanderfolgen, wobei jedes Teilbild aller Videospuren ebenfalls Toninformationen für verschiedene Audiospuren enthält, ferner bestehend aus Audiomitteln, die an diese Mittel zum Empfang des einzelnen Video-Eingangssignals angeschlossen sind, ein Audiosignal von einer dieser Audiospuren erzeugen, welches aus der entsprechenden Toninformation aller Teilbilder der Audiospur besteht, und von der gewählten Videospur gesteuert sind.

15. Interaktives Video-Steuergerät nach Anspruch 14, bei welchem dieses bestimmte, kontinuierliche Video-Eingangssignal aus einer Anzahl (N) Videospuren besteht und jede Spur (n) aus den Teilbildern n, N+n, 2N+n, 3N+n dieses bestimmten, kontinuierlichen Video-Eingangssignals gebildet wird, worin n 1 bis N bedeutet.

16. Interaktives Video-Steuergerät nach Anspruch 14, bei welchem die Anzahl von Audiospuren und Videospuren gleich ist.

17. Interaktives Video-Steuergerät nach Anspruch 14, bei welchem die Anzahl von Audiospuren und Videospuren ungleich ist.

18. Interaktives Video-Steuergerät nach Anspruch 1, zum Wählen aus einer Mehrzahl von Videospuren von Videodaten, welche aus aufeinanderfolgenden Teilbildern der verschiedenen Videospuren bestehen.

19. Interaktives Video-Steuergerät nach Anspruch 18, bei welchem das vom Speicher gesteuerte Mittel (46) zur Erzeugung eines kontinuierlichen Video-Ausgangssignals auch auf das Mittel (14) zum Empfang des einzelnen Video-Eingangssignals und das Wählmittel (22) anspricht, welches als Bestandteil dieses kontinuierlichen Video-Ausgangssignals Teilbilder der gewählten Videospur vom Mittel (14) zum Empfang des einzelnen Video-Eingangssignals liefert, solange dieses Video-Eingangssignal Videodaten der gewählten Spur enthält.

20. Interaktives Video-Steuergerät nach Anspruch 19, welches weiterhin Mittel (30) aufweist, die die Teilbilder der gewählten Videospur in eine im Speichermittel (32) direkt speicherbare Form umsetzen, solange das Video-Eingangssignal Videodaten der gewählten Spur enthält, und Mittel (42) zur Umsetzung der Teilbilder zurück in die Form des kontinuierlichen Video-Ausgangssignals, wobei alle Teilbilder des kontinuierlichen Video-Ausgangssignals im wesentlichen gleich bearbeitet werden, bevor sie das kontinuierliche Video-Ausgangssignal bilden.

21. Interaktives Video-Steuergerät nach Anspruch 18, welches weiterhin graphische Mittel (304) aufweist, um graphische Information zu den Videodaten des kontinuierlichen Video-Ausgangssignals hinzuzufügen.

22. Interaktives Video-Steuergerät nach Anspruch 21, bei welchem diese graphischen Mittel (304) auf eine Handsteuerung ansprechen.

23. Interaktives Video-Steuergerät nach Anspruch 1, welches weiterhin graphische Mittel (304) aufweist, um graphische Informationen zu den Videodaten des kontinuierlichen Video-Ausgangssignals hinzuzufügen.

24. Interaktives Video-Steuergerät nach Anspruch 23, bei welchem diese graphischen Mittel (304) auf eine Handsteuering ansprechen.

25. Interaktives Video-Steuergerät nach Anspruch 1, bei welchem das Mittel (14) zum Empfang des Videosignals ein Empfänger zum Empfang eines Rundfunksignals ist.

26. Interaktives Video-Steuergerät nach Anspruch 25, welches weiterhin ein Abspielgerät für Videobänder aufweist, das an das Mittel (14) zum Empfang des Video-Eingangssignals angeschlossen ist und diesem das einzelne, bestimmte und kontinuierliche Video-Eingangssignal liefert.

**Revendications**

1. Appareil vidéo interactif pour sélectionner entre une pluralité de pistes vidéo de données vidéo intercalées d'une manière prédéterminée un signal vidéo d'entrée unique prédéterminé et continu contenant des données vidéo de différentes pistes à des temps différents, comprenant:

des moyens (14) pour recevoir ledit signal vidéo d'entrée;

des moyens de sélection (22) pour sélectionner une des pistes de ladite pluralité de pistes vidéo;

des moyens de mémoire (26) répondant auxdits moyens de sélection (22) pour stocker des données vidéo de la piste vidéo momentanément sélectionnée pendant les intervalles de temps durant lesquels ledit signal vidéo d'entrée contient des données vidéo de la piste vidéo sélectionnée; et

des moyens (46) répondant auxdits moyens de mémoire (26) pour produire un signal vidéo de sortie continu formé des données vidéo de la piste momentanément sélectionnée.

2. Appareil vidéo interactif selon la revendication 1, comprenant:

des moyens (28) pour séparer le signal vidéo d'entrée en un signal de luminance et un signal de chrominance;

des moyens (30) pour digitaliser le signal de chrominance avant de le délivrer et de le stocker directement;

des moyens (30) pour digitaliser le signal de chrominance avant de le délivrer et de le stocker directement.

3. Appareil vidéo interactif selon la revendication 2, caractérisé en ce que:

lesdits moyens de mémoire (26) comprennent une mémoire de luminance (300) pour stocker le signal de luminance digitalisé et une mémoire de chrominance (302) pour stocker le signal de chrominance digitalisé.

4. Appareil vidéo interactif selon la revendication 2, comprenant:

des moyens (518) pour dèmoduler le signal de chrominance;

des moyens (520) pour séparer le signal de chrominance démodulé entre au moins un premier signal couleur primaire et un second signal couleur primaire;

des moyens (534) pour multiplexer le premier signal couleur primaire avec le second signal couleur primaire; et

lesdits moyens de digitalisation (530) pour digitaliser le signal de chrominance multiplexé.

5. Appareil vidéo interactif selon la revendication 2, comprenant:

des moyens (606) pour convertir le signal de luminance délivré directement et stocké digitalisé en un signal de luminance analogique;

des moyens (624, 626) pour convertir le signal de chrominance délivré directement et stocké digitalisé en un signal de chrominance analogique;

des moyens (612) pour ajouter, coder et remoduler les signaux de luminance et de chrominance.

6. Appareil vidéo interactif selon la revendication 2, comprenant:

des moyens (606) pour convertir le signal de luminance délivré directement et stocké digitalisé en un signal de luminance analogique;

des moyens (614, 616) pour démultiplexer le premier signal couleur primaire délivré directement en stocké digitalisé et le second signal primaire digitalisé;

des moyens (624) pour convertir le premier signal couleur primaire délivré directement et stocké digitalisé en un signal analogique;

des moyens (626) pour convertir le second signal primaire délivré directement et stocké digitalisé en un signal analogique;

des moyens (612) pour ajouter, coder et remoduler le signal de luminance et les premier et second signaux couleur primaires.

7. Appareil vidéo interactif selon la revendication 1, caractérisé en ce qu'au moins une des piste contient des données audio sous forme codée, comprenant:

des moyens (540) pour décoder les signaux audio.

8. Appareil vidéo interactif selon la revendication 1, dans lequel les deux ou plus de deux pistes contiennent deux ou plus de deux signaux audio séparés, comprenant:

des moyens (266) répondant à des moyens de sélection de pistes pour sélectionner un des signaux audio;

des moyens (540) pour décoder le signal audio sélectionné.

9. Appareil vidéo interactif selon la revendication 1, comprenant:

une unité de microprocesseur (48) pour générer une sortie d'affichage graphique répondant aux moyens d'entrée de lecture.

10. Appareil vidéo interactif selon la revendication 1, caractérisé en ce que:

au moins une des pistes comprend un signal audio;

au moins chaque trame de l'une des pistes consiste en une pluralité de lignes de balayage horizontal qui contiennent une partie vidéo active et une partie de retour du spot inactif; et

le signal audio est prévu sur la partie de retour de spot inactive.

11. Appareil vidéo interactif selon la revendication 1, comprenant:

un ordinateur (50), caractérisé en ce que

au moins une piste contient des instructions codées pour l'ordinateur, et en ce que

chaque trame comprend une première pluralité de lignes de balayage horizontal définissant une partie vidéo verticale active et une seconde pluralité de lignes de balayage horizontal définissant une partie verticale de suppression inactive; et en ce que

les instructions codées sont prévues sur la seconde pluralité de lignes de balayage horizontal dans la partie verticale de suppression inactive.

12. Appareil vidéo interactif selon la revendication 10, caractérisé en ce que

le signal audio est un signal digital.

13. Appareil vidéo interactif selon la revendication 10, caractérisé en ce que

le signal audio et un signal analogique.

14. Appareil vidéo interactif selon la revendication 1, caractérisé en ce que ledit signal d'entrée vidéo prédéterminé et continu est formé de trames de la pluralité de pistes vidéo intercalées d'une manière prédéterminée, chaque trame de toutes les pistes vidéo contenant aussi une information acoustique pour une pluralité de pistes audio, et comprenant en outre des moyens audio couplés auxdits moyens pour recevoir ledit signal vidéo d'entrée pistes audio formée de l'instruction acoustique correspondante de toutes les trames des pistes vidéo et répondant à la piste vidéo sélectionnée.

15. Appareil vidéo interactif selon la revendication 14, caractérisé en ce que ledit signal vidéo d'entrée prédéterminé et continu comprend une pluralité de pistes vidéo égale à (N) et en ce que chaque piste (n) est formée de n, N+n, 2N+n, 3N+n . . . trames dudit signal vidéo d'entrée prédéterminé et continu, où n est compris entre 1 et N.

16. Appareil vidéo interactif selon la revendication 14, caractérisé en ce que les nombres de pistes audio et de pistes vidéo sont égaux.

17. Appareil vidéo interactif selon la revendication 14, caractérisé en ce que les nombres de piste audio et de pistes vidéo sont inégaux.

18. Appareil vidéo interactif selon la revendication 1, pour sélectionner entre une pluralité de pistes vidéo de données vidéo comprenant des trames intercalées de la pluralité des pistes vidéo.

19. Appareil vidéo interactif selon la revendication 18, caractérisé en ce que lesdits moyens (46) répondant aux moyens de mémoire pour produire un signal vidéo de sortie continu et répondant aussi auxdits moyens (14) pour recevoir ledit signal vidéo d'entrée unique et aux moyens de sélection (22) pour produire, comme partie dudit signal vidéo de sortie continu, des trames de la piste vidéo sélectionnée à partir desdits moyens (14) pour recevoir ledit signal vidéo d'entrée unique pendant les temps durant lesquels ledit signal vidéo d'entrée contient des données vidéo de la piste sélectionnée.

20. Appareil vidéo interactif selon la revendication 19, comprenant en outre des moyens (30) pour convertir lesdites trames des pistes vidéo sélectionnées pendant les temps durant lesquels ledit signal vidéo d'entrée contient des données vidéo de la piste sélectionnée dans une forme susceptible d'être directement mémorisée dans lesdits moyens de mémoire (32) et des moyens (42) pour convertir lesdites trames à nouveau dans la forme dudit signal vidéo de sortie continu, toutes les trames dudit signal vidéo de sortie continu ayant été soumises substantiellement au même traitement afin de former une partie du signal vidéo de sortie continu.

21. Appareil vidéo interactif selon la revendication 18, comprenant en outre des moyens graphiques (304) pour ajouter une information graphique aux données vidéo dudit signal vidéo de sortie continu.

22. Appareil vidéo interactif selon la revendication 21, caractérisé en ce que lesdits moyens graphiques (304) répondent à une commande manuelle.

23. Appareil vidéo interactif selon la revendication 1, comprenant en outre des moyens graphiques pour ajouter une information graphique aux données vidéo dudit signal vidéo de sortie continu.

24. Appareil vidéo interactif selon la revendication 23, caractérisé en ce que lesdits moyens graphiques (304) répondent à une commande manuelle.

25. Appareil vidéo interactif selon la revendication 1, caractérisé en ce que lesdits moyens (14) pour recevoir ledit signal vidéo sont des moyens radioélectriques.

26. Appareil vidéo interactif selon la revendication 25, comprenant en outre une unité de reproduction de bande vidéo couplée auxdits moyens (14) pour recevoir ledit signal vidéo d'entrée, afin de produire pour ces derniers ledit signal vidéo d'entrée unique prédéterminé et continu.

FIG. —1

EP 0 191 822 B1

FIG.—2A

| FIG.-2A | FIG.-2B |
|---------|---------|
| FIG.-2C | FIG.-2D |

512*

FIELD INDEX — FI ③

CLAMP 1 ⑤

CLAMP 2 ⑤

COMPOSITE BLANK — CBLANK ⑥

D GATE ③

VI
V2
V4
V8
VI6
V32
V64
V128
V CLK ③

264

V256

LS 163

263

LS 163

260

V COUNTER ØV

257

262

290
291
292

247 V SYNC

V SYNC

244 S Q / R

261

LS 163

FIG.—2B

3

FIG.—2C

FIG.—2D

FIG. — 3A

EP 0 191 822 B1

FIG. — 3B

EP 0 191 822 B1

FIG.-3C

FIG.—3D

EP 0 191 822 B1

**EP 0 191 822 B1**

FIG.—4

FIG.—5

EP 0 191 822 B1

FIG. —6

EP 0 191 822 B1

FIG.—7

STANDARD NTSC WAVEFORM

HORIZONTAL LINE
(ACTIVE VIDEO)

H BLANKING

WHITE

VIDEO
INFORMATION
(LUMA + CHROMA)

FRONT
PORCH

BACK
PORCH

COLOUR
BURST

BLACK (BLANKING)
LEVEL

H SYNCH
PULSE

H SYNCH EDGE

MODIFIED NTC WAVEFORM

NARROWER HORIZONTAL LINE
(ACTIVE VIDEO)

AUDIO
PEDESTAL

END OF
PICTURE

AUDIO PULSE
TRACK B

AUDIO PULSE
TRACK A

AUDIO PULSE
TRACK B

AUDIO B SAMPLE PULSE

AUDIO A SAMPLE PULSE

FIG. −8

EP 0 191 822 B1